# EUROPÄISCHE PATENTSCHRIFT

(11) **EP 2 420 376 B1**
(45) Veröffentlichungstag und Bekanntmachung des Hinweises auf die Patenterteilung: **05.10.2016**
(21) Anmeldenummer: 11006776.6
(22) Anmeldetag: 18.08.2011
(51) Int. Cl.: B29C 63/22, B60R 13/02

(54) **Herstellvorrichtung und Verfahren für die Herstellung eines Dekorteils**
Device for producing a decorative element and method
Dispositif de fabrication d'un élément de décor et procédé

(30) Priorität: 18.08.2010 DE 102010034714
(43) Veröffentlichungstag der Anmeldung: 22.02.2012
(73) Patentinhaber: Faurecia Innenraum Systeme GmbH, 76767 Hagenbach (DE)
(72) Erfinder: Schilles, Wilfried, 76870 Kandel (DE); Koida, Heinz, 76768 Berg (DE)
(74) Vertreter: Schatt, Markus F.

(56) Entgegenhaltungen:
- EP-A2- 0 569 846
- WO-A2-2007/139865
- DE-A1- 4 305 200
- US-A- 5 830 518

## Beschreibung

Die Erfindung betrifft eine Herstellvorrichtung für die Herstellung eines Dekorteils, das einen Träger, eine Basisdekorschichtund eine Zusatzdekorschicht aufweist. Weiter ist Gegenstand der Erfindung ein entsprechendes Verfahren.

Es ist insbesondere im Bereich von Innenverkleidungen von Kraftfahrzeugen häufig erwünscht, dass Oberflächen solcher Innenverkleidungen unterschiedliche Dekore, insbesondere unterschiedliche Dekoroberflächen aufweisen. So kann es zum Beispiel gewünscht sein, dass auf einem relativ großen Dekorteil, also einer großen Innenverkleidung eines Kraftfahrzeuges, ein Abschnitt mit hochwertiger Verkleidung, beispielsweise aus Stoff oder Leder, verkleidet, also dekoriert ist. Der Rest der Innenverkleidung, also der Rest des Dekorteils ist üblicherweise mit weniger aufwendigen Dekoren versehen. Solche weniger aufwendigen Dekore können beispielsweise Basisdekorschichten, insbesondere aus Kunststoff sein.

Die Offenlegungsschrift DE 43 05 200 A1 offenbart ein Innenverkleidungsteil mit einem formstabilen Trägerteil und einer Kaschierfolie, die mit dem Trägerteil durch eine Polsterschaumschicht ganzflächig verbunden ist. Auf der dem Trägerteil abgewandten Sichtseite befindet sich ein auf der Kaschierfolie angeordneter und durch Kleber verbundener andersartiger Einsatz, dessen umlaufend abgewinkelter Materialüberstand von einer umlaufenden, in die Polsterschaumschicht eingebetteten Ringfalte der Kaschierfolie umschlossen ist und der mit einer optisch einwandfreien Trennlinie von der Kaschierfolie abgesetzt ist.

Aus der WO 2007/139865 A2 ist ein Innenverkleidungsteil für ein Fahrzeug mit einem Träger, einer Abdeckschicht und einem Dekorelement bekannt. Das Trägerteil weist eine Nut auf, die zur Aufnahme des Randbereichs des Dekorelements geeignet ist.

Die Patentschrift US 5,830,518 offenbart ein Verfahren zum Verbinden von einem Trägerteil mit einer Abdeckschicht, wobei die Abdeckschicht ein Textil sein kann. Hierbei wird der Randbereich der Abdeckschicht in eine Ausnehmung des Trägerteils eingeführt und mit einem Klebemittel in einer Pressvorrichtung zu einem Teil verklebt. Dieses beschriebene Verfahren wir auch im Automobilbereich eingesetzt.

Zur Herstellung derartiger Dekorteile wird in einem ersten Schritt das hochwertige Dekor, also beispielsweise Stoff oder Leder auf einen eigenen ersten Träger, also sozusagen einen Zusatzdekorschichtträger, kaschiert, insbesondere mit diesem verklebt. In einem zweiten Schritt wird das weniger hochwertige Dekor, beispielsweise eine Kunststofffolie, insbesondere mit einem Kleber auf einen ebenfalls eigenen zweiten Träger, also sozusagen einen Basisdekorschichtträger, kaschiert. In einem anschließenden kombinierenden, dritten Schritt wird der erste Träger mit dem hochwertigen Dekor auf die Basisdekorschicht mit dem weniger hochwertigen Dekor auf dem zweiten Träger aufgesetzt und mit diesem ebenfalls verklebt. Es findet also ein Verkleben der Zusatzdekorschichtträgers mit der Basisdekorschicht statt. Insgesamt sind demnach drei Schritte notwendig um ein derartiges Dekorteil herzustellen. Es sind bis zu drei Werkzeuge notwendig, welche die drei beschriebenen Schritte durchführen. Die Anzahl der Werkzeuge wie auch die Notwendigkeit einer Verklebung zwischen den einzelnen Komponenten und darüber hinaus das notwendige

Vorsehen eines eigenen Trägers für das hochwertige Dekor, also die Zusatzdekorschichtträger, ist aus Kostengesichtspunkten sehr nachteilig.

Es ist Aufgabe der vorliegenden Erfindung, eine Herstellvorrichtung zur Verfügung zu stellen, welche besonders kostengünstig und einfach ein Dekorteil mit einer Basisdekorschicht und einer Zusatzdekorschicht auf einem gemeinsamen Träger herstellen kann.

Gelöst wird diese Aufgabe durch eine Herstellvorrichtung mit den Merkmalen des unabhängigen Anspruchs 1 sowie durch ein Verfahren mit den Merkmalen des unabhängigen Anspruchs 9. Vorteilhafte Ausführungsformen ergeben sich insbesondere aus den an die unabhängigen Ansprüche anschließenden Unteransprüche.

Mit der erfindungsgemäßen Herstellvorrichtung kann ein Dekorteil hergestellt werden, das einen Träger, einen einer Seitenfläche des Trägers zugeordnete Basisdekorschicht und einen der gleichen Seitenfläche des Trägers zugeordnete Zusatzdekorschicht aufweist. Es handelt sich also bei dem Dekorteil um ein im Wesentlichen flächiges Bauteil, z.B. ein Bauteil zur Innenverkleidung von Kraftfahrzeugen, das eine sichtbare Sichtseite als Seitenfläche und ein der Sichtseite abgewandte Seite aufweist. Dabei wird die Sichtseite des Dekorteils mit der Basisdekorschicht und der Zusatzdekorschicht versehen.

Die Herstellvorrichtung weist eine untere Werkzeugvorrichtung und eine mit der unteren Werkzeugvorrichtung in Form einer Presse zusammenwirkende obere Werkzeugvorrichtung auf. Die obere Werkzeugvorrichtung besitzt eine formgebende Konturoberfläche, welche zumindest einen erster Flächenabschnitt für das Anlegen der Basisdekorschicht und zumindest einen zweiten Flächenabschnitt für das Anlegen die Zusatzdekorschicht aufweist. Dabei ist im Rahmen der vorliegenden Erfindung zu unterscheiden zwischen Zusatzdekorschicht und Basisdekorschicht sowie den entsprechenden Abschnitten.

Unter dem Begriff "Basisdekorschicht" ist dabei grundsätzlich der Flächenabschnitt eines Dekorteils zu verstehen, welcher mit einem ersten Dekor, beispielsweise einem weniger hochwertigen Dekor versehen sein soll. Unter dem Begriff "Zusatzdekorschicht" ist dabei grundsätzlich der Bereich eines Dekorteils zu verstehen, welcher mit einem zweiten Dekor, insbesondere einem höherwertigeren Dekor versehen sein soll. Selbstverständlich ist es im Rahmen der vorliegenden Erfindung auch möglich, dass die beiden Dekore, also Basisdekorschicht und Zusatzdekorschicht, eine im Wesentlichen gleichwertige Dekorqualität aufweisen, jedoch unterschiedliche Farben, Haptiken oder anderweitige Eigenschaften aufweisen, die die beiden Dekore voneinander unterscheiden. Häufig wird es jedoch so sein, dass die Zusatzdekorschicht einen relativ stark begrenzten Bereich des Dekorteils ausmacht und aus hochwertigem Material hergestellt ist, während die Basisdekorschicht sozusagen den Rest des Dekorteils abdeckt und mit weniger hochwertigerem und damit kostengünstigerer Materialwahl auskommt. Die jeweiligen zugehörigen Flächenabschnitte der Konturoberfläche, also der erste Abschnitt wie auch der zweite Abschnitt der Konturoberfläche, sind für das Anlegen der jeweiligen Zusatzdekorschicht und der jeweiligen Basisdekorschicht ausgebildet. Im einfachsten Fall handelt es sich bei dieser Anpassung um die flächige Ausbildung des jeweiligen Flächenabschnitts. Dabei kann der zweite Flächenabschnitt auch direkt an den Rand des herzustellenden Dekorteils angrenzen und nur teilweise von dem ersten Abschnitt begrenz werden. In einem solchen Fall ist der erfindungsgemäße Vorteil nur in dem Grenzbereich zwischen den beiden Flächenabschnitten erzielbar.

Weiter ist der oberen Werkzeugvorrichtung eine Unterdruckvorrichtung zugeordnet, welche derart ausgestaltet ist, dass zwischen dem zweitem Flächenabschnitt und der angelegter Zusatzdekorschicht und/oder zwischen dem erstem Abschnitt und der angelegter Basisdekorschicht ein Unterdruck erzeugt werden kann. Das Erzeugen von Unterdruck ist vorteilhaft, um das Anlegen der Basisdekorschicht und/oder die Zusatzdekorschicht an dem entsprechenden Flächenabschnitt weiter zu verbessern. Insbesondere bei oberen Werkzeugvorrichtungen, welche derart ausgebildet sind, dass die Zusatzdekorschicht, wie auch die Basisdekorschicht entgegen der Schwerkraft in das obere Werkzeug gegen die Konturoberfläche gelegt werden sollen, kann die Unterdruckvorrichtung vorteilhaft sein, um dieses Anlegen überhaupt zu ermöglichen. Insbesondere kann auf diese Weise ein Überkopfarbeiten, also ein Überkopfeinlegen durch eine Bedienperson gegen die Schwerkraftrichtung unterstützt, beziehungsweise vollständig vermieden werden, da durch den Unterdruck die Basisdekorschicht und/oder die Zusatzdekorschicht in die gewünschte Position gesaugt wird.

Darüber hinaus ist um den zweiten Abschnitt herum zumindest abschnittsweise wenigstens ein Konturgeber vorgesehen, dass der im Querschnitt gesehen zwischen einer eingefahrenen und einer ausgefahrenen Stellung bewegbar ist, wobei in der ausgefahrenen Stellung der die Anlagefläche des Konturgeber über den Verlauf der Konturoberfläche übersteht. Für diese Bewegung des Konturgebers kann beispielsweise eine Konturgeberbewegungsvorrichtung vorgesehen sein, die mechanisch und/oder elektrisch den Konturgeber in der gewünschten Weise bewegt. So ist es möglich, dass ein mechanischer Antrieb, zum Beispiel mittels eines Getriebes die Antriebskraft von einem Motor für die Bewegung des Konturgebers nutzt. Auch ist es denkbar, dass ein magnetischer Antrieb vorgesehen ist, der den Konturgeber durch ein sich veränderndes Magnetfeld in gewünschter Weise bewegt. Der Konturgeber dient also dazu, durch seine Bewegung, insbesondere in einer geführten Bahn, beispielsweise entlang einer Führung, Material zu schieben, bzw. dem Material der Basisdekorschicht und/oder der Zusatzdekorschicht eine geänderte Kontur zu geben, d.h. es umzuformen. Dies kann je nach geometrischer Ausgestaltung und Materialwahl der Basisdekorschicht und/oder der Zusatzdekorschicht sowohl elastisch, als auch plastisch oder aus einer Mischung aus beiden Verformungsvarianten ausgeführt sein. So ist es möglich, dass durch die Bewegung des Konturgebers und durch Kontaktierung mit der Anlagefläche des Konturgebers, die Basisdekorschicht plastisch verformt wird, also insbesondere eine Nut gebildet wird. Der Konturgeber ist dabei hinsichtlich seiner Geometrie an die gewünschte Nutform, beziehungsweise die gewünschte Verformungsform angepasst. Beispielsweise ist es denkbar, dass der Konturgeber im Wesentlichen messerförmig, aber mit einer nicht zu scharfen, insbesondere einer stumpfen Schneide ausgeführt ist, welche die Bewegung des Konturgebers in eine Umformung der Basisdekorschicht und/oder der Zusatzdekorschicht überträgt, ohne diese zu trennen. Auch andere geometrische Ausgestaltungsformen des Konturgebers, wie beispielsweise an ihrem vorderen Ende abgerundete Stifte oder ähnliches sind im Rahmen der vorliegenden Erfindung denkbar.

Der Konturgeber ist dabei erfindungsgemäß um den zweiten Flächenabschnitt herum vorgesehen. Das bedeutet, dass sozusagen an der Grenze, bzw. dem Grenzbereich, bzw. dem Verbindungsbereich zwischen dem erstem Abschnitt und dem zweiten Abschnitt der Konturgeber angeordnet ist. Dabei kann der Konturgeber auch mehrteilig ausgeführt sein oder aber mehr als ein Konturgeber vorgesehen sein, so dass Material der Basisdekorschicht und/oder der Zusatzdekorschicht im Wesentlichen entlang einer durchgehenden Linie, z.B. vollständig um die Zusatzdekorschicht herum, z.B. in kreisform, also im Wesentlichen vollständig entlang der Grenze zwischen dem ersten Abschnitt und dem zweiten Abschnitt, vom Konturgeber bewegt, insbesondere in eine geänderte Kontur, umgeformt werden kann.

Somit wird es auf überraschende Weise durch die vorliegende Erfindung möglich, mit einer einzigen Herstellvorrichtung das gesamte Dekorteil, bestehend aus dem Träger der Basisdekorschicht, und der Zusatzdekorschicht herzustellen. Im Gegensatz zu den bekannten Herstellvorrichtungen aus dem Stand der Technik wird also auf eine komplette Werkzeugvorrichtung verzichtet, und darüber hinaus Material für einen separaten Träger der Zusatzdekorschicht eingespart. Vielmehr wird durch das Aufnehmen der Zusatzdekorschicht in dem zweiten Flächenabschnitt und dem anschließenden Aufnehmen der Basisdekorschicht in dem ersten Flächenabschnitt direkt die Dekoroberfläche des gewünschten Dekorteils erzeugt. Dabei ist es unerheblich, ob die Basisdekorschicht für den Bereich des Dekorteils eine Aussparung aufweist, also die Zusatzdekorschicht anschließend direkt auf einen Träger aufgebracht wird, oder ob die Basisdekorschicht durchgängig auch unterhalb der Zusatzdekorschicht verläuft. Entscheidend ist, dass unter beiden Komponenten, also Zusatzdekorschicht und Basisdekorschicht, anschließend ein gemeinsamer Träger, bzw. ein gemeinsames Trägerteil aufgebracht werden kann. Ein separater, zweiter Träger für die Zusatzdekorschicht ist bei dieser Ausführung gemäß der vorliegenden Erfindung nicht mehr notwendig.

Weiter wirken die Unterdruckvorrichtung und der Konturgeber erfindungsgemäß wie folgt zusammen: Durch den Unterdruck werden die Zusatzdekorschicht und/oder die Basisdekorschicht gegen die Konturoberfläche der oberen Werkzeugvorrichtung gesaugt. Mit anderen Worten werden die Basisdekorschicht und/oder die Zusatzdekorschicht genau in dieser Position gehalten. Gegen die Kraft, also gegen die Haltekraft die durch die Unterdruckvorrichtung auf die Basisdekorschicht und/oder die Zusatzdekorschicht ausgeübt wird, bewegt sich nun der Konturgeber von dieser Konturoberfläche weg. Mit anderen Worten ist die Bewegung des Konturgebers und damit die Verformungskraft, welche durch diesen auf die Zusatzdekorschicht und/oder die Basisdekorschicht ausgeübt wird, der Haltekraft durch die Unterdruckvorrichtung im Wesentlichen entgegen gerichtet. Das Material der Basisdekorschicht wird sich in Abhängigkeit der auf diese wirkenden Kräfte entsprechend bewegen. Insbesondere wird dabei eine plastische Umformung der Basisdekorschicht durchgeführt, um eine Nut in der Basisdekorschicht, also eine Basisdekorschichtnut zu erzeugen. Darüber hinaus kann durch den Konturgeber auch ein Teil der Zusatzdekorschicht in diese erzeugte Basisdekorschichtnut mit hinein geschoben werden. Damit entsteht ein sauberer Abschluss zwischen der Basisdekorschicht und dem Zusatzdekorschicht auf deren später sichtbarer Oberseite bzw. Sichtseite, welche bei dem erfindungsgemäßen Verfahren direkt an der Konturoberfläche der oberen Werkzeugvorrichtung, also am jeweiligen ersten Abschnitt beziehungsweise zweiten Abschnitt anliegt. Durch das Ausbilden der Nut wird also die Zusatzdekorschicht auch geometrisch mit der Basisdekorschicht verbunden, sodass ein optisch sauberer Abschluss zwischen den beiden Dekoren hergestellt wird.

Die Verbindung zwischen der Zusatzdekorschicht und der Basisdekorschicht, beziehungsweise zwischen der Zusatzdekorschicht und dem Träger, beziehungsweise zwischen der Basisdekorschicht und der Träger, können dabei in unterschiedlicher Weise hergestellt sein. So ist es möglich, dass auch hier Klebstoffe verwendet werden, um die einzelnen Elemente miteinander zu verbinden. Es kann jedoch vorteilhaft sein, wenn auf Kleber verzichtet werden kann, also wenn eine stoffschlüssige, beispielsweise durch Hitze bewirkte Verbindung zwischen den einzelnen Komponenten, also zwischen der Zusatzdekorschicht, Basisdekorschicht und dem Träger hergestellt werden kann. Hierzu folgen später noch weitere Einzelheiten.

Die Unterdruckvorrichtung gemäß der vorliegenden Erfindung kann in unterschiedlicher Weise ausgestaltet sein. So ist es in besonders einfacher Weise möglich in der oberen Werkzeugvorrichtung Unterdruckkanäle vorzusehen, welche in fluidkommunizierender Verbindung mit einer Vakuumpumpe, also einer Pumpe, die in der Lage ist einen Unterdruck zu erzeugen, stehen. Über diese Kanäle kann der Leerraum zwischen der Zusatzdekorschicht und dem zweiten Abschnitt, beziehungsweise der Basisdekorschicht und dem ersten Abschnitt evakuiert werden, also ein Unterdruck angelegt werden. Die jeweiligen Unterdruckkanäle können dabei unterschiedlich ausgestaltet sein. So ist es möglich, dass sie besonders fein ausgestaltet sind, beispielsweise in Form einer mikroporösen Struktur mit Porengrößen im Bereich von 1µm bis 100µm, die Kanäle bilden, um eine besonders breite Aufteilung, insbesondere eine besonders homogene Unterdruckabsaugungsverteilung an der Konturoberfläche der oberen Werkzeugvorrichtung zu erzeugen. Auch eine Kombination aus einfachen Fluidkanälen, also Unterdruckkanälen und solcher mikroporöser Struktur ist im Rahmen der vorliegenden Erfindung denkbar.

Die jeweiligen Konturoberflächenabschnitte, also der erste Flächenabschnitt und/oder der zweite Flächenabschnitt können darüber hinaus eine Struktur aufweisen, welche sowohl eine Mikrostruktur mit Strukturgrößen kleiner als 1 µm, als auch eine Makrostruktur mit Strukturgrößen größer als 1 µm sein kann. Eine solche Struktur dient dazu, die finale Form, insbesondere hinsichtlich optischer und haptischer Eigenschaften, der Zusatzdekorschicht, beziehungsweise der Basisdekorschicht einzustellen. Dabei können insbesondere Mikrostrukturen verwendet werden, welche beispielsweise eine Narbung aufweisen, also eine Feinstruktur, die während dem Vorgang auf der Basisdekorschicht beziehungsweise auf dem Zusatzdekorschicht erzeugt wird. Die Einprägung der Mikrostruktur auf der Oberseite der Zusatzdekorschicht, beziehungsweise der Basisdekorschicht erfolgt dabei einerseits durch die Möglichkeit von deren Rückseite Druck, mittels einem Träger, also durch das Anpressen des Trägers, welches grundsätzlich für die Haftvermittlung zwischen dem Träger und der Basisdekorschicht und/oder der Zusatzdekorschicht notwendig ist, zu erzeugen. Darüber hinaus ist es auch möglich, dass durch das Anlegen des Unterdrucks eine ausreichende Haltekraft erzeugt wird, welche die Einprägung der Mikrostruktur auf der Oberfläche der Zusatzdekorschicht und/oder der Basisdekorschicht bewirkt.

Jedoch ist es im Rahmen der vorliegenden Erfindung auch möglich, dass eine Basisdekorschicht verwendet wird, die bereits eine Mikropositivstruktur aufweist. Solche Basisdekorschichten werden beispielsweise als TPO2 bezeichnet und weisen bereits eine Narbung auf. Bei der Verwendung einer derartigen Basisdekorschicht kann der Unterdruck zum Aufnehmen der Basisdekorschicht im ersten Flächenabschnitt der Konturoberfläche deutlich geringer gewählt werden, um ein ungleichmäßiges Verstreckung der bereits bestehenden Mikropositivstruktur zu vermeiden. Auch ist es möglich für die Aufnahme der Basisdekorschicht einen leichten Überdruck auf der gegenüberliegenden Seite der Basisdekorschicht anzulegen, um diese sozusagen in die gewünschte Position zu schieben.

Die Zusatzdekorschicht, insbesondere eine Zusatzdekorschicht aus höherwertigerem Material, kann dabei beispielsweise aus hochwertigem Kunststoff, aber auch aus Stoff oder Leder oder Lederimitat, hergestellt sein. Die Basisdekorschicht selbst ist häufig aus kostengünstigerem Kunststoff, beispielsweise einer mehrlagigen Kunststoffschicht, bzw. Kunststofffolie hergestellt.

Mit einer erfindungsgemäßen Herstellvorrichtung ist somit in einem einzigen Schritt, und damit auch in einer einzigen Vorrichtung ein Dekorteil herzustellen, welches unterschiedliche Oberflächen, insbesondere hinsichtlich deren Optik, deren Haptik, und auch hinsichtlich deren Materials ermöglicht. In dieser einzelnen Vorrichtung ist darüber hinaus eine besonders vorteilhafte Anbindung der beiden Dekoroberflächen aneinander durch die Ausbildung einer möglichen Nut mittels des Konturgebers möglich. Selbstverständlich ist es auch denkbar, mehr als zwei unterschiedliche Dekore, in beliebiger Reihenfolge und beliebiger Anordnung durch eine erfindungsgemäße Herstellvorrichtung mit einander zu verbinden.

Es kann vorteilhaft sein, wenn bei einer erfindungsgemäßen Herstellvorrichtung der Konturgeber derart ausgestaltet ist, dass er mittels einer Bewegung aus einer eingefahrenen Stellung in eine ausgefahrene Stellung von der Konturfläche weg zumindest die angelegte Basisdekorschicht verformt. Durch diese Verformung ist beispielsweise die Ausbildung einer Nut, insbesondere einer V-förmigen Nut möglich. Diese Verformung kann sowohl elastisch, als auch plastisch erfolgen. Die Nut wird also durch das Bewegen von Material, also durch das Schieben und damit einhergehender Umformung, bzw. neuer Konturgebung des Materials der Basisdekorschicht erzeugt. Gleichzeitig ist es auch vorteilhaft, wenn bei einer erfindungsgemäßen Herstellvorrichtung der Konturgeber derart ausgestaltet ist, dass er mittels seiner Bewegung von der Konturoberfläche weg in die ausgefahrene Stellung zumindest die angelegte Zusatzdekorschicht verformt. Insbesondere findet diese Verformung ebenfalls elastisch oder plastisch in einer Weise statt, dass die Zusatzdekorschicht in die entsprechende Nut der Basisdekorschicht hineingeschoben wird.

Es kann also vorteilhaft sein, wenn bei einer erfindungsgemäßen Herstellvorrichtung der Konturgeber derart ausgestaltet ist, dass er mittels seiner Bewegung von der Konturoberfläche weg in der angelegten Basisdekorschicht eine Basisdekorschichtnut umformt und einen Abschnitt der Zusatzdekorschicht umformt bzw. in diese Basisdekorschichtnut hineinschiebt. Grundsätzlich ist also eine Umformung, bzw. Konturgebung durch den Konturgeber der Basisdekorschicht und/oder der Zusatzdekorschicht sinnvoll, um die Kontaktbereiche zwischen der Basisdekorschicht und der Zusatzdekorschicht optisch ansprechender zu gestalten. Eine besonders vorteilhafte optisch ansprechende Ausbildung ist es, wenn in der Basisdekorschicht die Nut ausgebildet wird und darüber hinaus zumindest ein Abschnitt der Zusatzdekorschicht in diese Basisdekorschichtnut hineingeschoben wird. Mit anderen Worten wird die jeweilige Kante, also der Endabschnitt der Zusatzdekorschicht in der Basisdekorschichtnut versteckt, sodass an der Oberfläche des Dekorteils ein sauberer Stoß zwischen der Oberfläche der Basisdekorschicht und der Oberfläche der Zusatzdekorschicht bestehen bleibt. Unansehnliche Kantenabschnitte der Zusatzdekorschicht, insbesondere Randabschnitte, welche beispielsweise von dessen Bearbeitung, insbesondere des Schneidens der Zusatzdekorschicht herrühren, werden also in der Basisdekorschichtnut versteckt. Ein eigener zweiter Träger ist hierfür nicht notwendig, da die Basisdekorschicht die Zusatzdekorschicht in der Nut dementsprechend aufnimmt. Die mechanische Unterstützung erfolgt für beide, also für Basisdekorschicht und Zusatzdekorschicht durch einen gemeinsamen Träger.

Weiter kann es vorteilhaft sein, wenn bei einer erfindungsgemäßen Herstellvorrichtung eine Klemmvorrichtung zur Einspannung der Basisdekorschicht vorgesehen ist. Diese Klemmvorrichtung ist derart an der oberen Werkzeugvorrichtung anordnet, dass der Raum zwischen der eingespannten Basisdekorschicht und der Konturoberfläche der Werkzeugvorrichtung abgedichtet ist. Eine solche Abdichtung hat zur Folge, dass, wenn über die Unterdruckvorrichtung ein Unterdruck in diesen Raum zwischen der eingespannten Basisdekorschicht und der Konturoberfläche angelegt wird, diese Basisdekorschicht mehr oder weniger automatisch gegen die Konturoberfläche, insbesondere gegen den ersten Abschnitt gezogen wird. Dieses Ziehen hat dabei insbesondere eine plastische Komponente, es wird also die Basisdekorschicht zumindest abschnittsweise plastisch umgeformt. Mit anderen Worten erhält die Basisdekorschicht durch die plastische Umformung und der Einwirkung des Unterdrucks, beziehungsweise der entsprechenden Krafteinwirkung auf das Material der Basisdekorschicht, die finale Form durch die Konturoberfläche der oberen Werkzeugvorrichtung.

Die Abdichtung kann dabei so ausgestaltet sein, dass ein Nachfließen der Basisdekorschicht über diese Abdichtvorrichtung nicht möglich ist. So ist es beispielsweise denkbar, dass die Klemmvorrichtung Rastfortsätze aufweist, die die Basisdekorschicht in entsprechende Rastvertiefungen in der oberen Werkzeugvorrichtung drücken. Auf diese Weise wird die Basisdekorschicht zum Abdichten zwischen Klemmvorrichtung und oberer Werkzeugvorrichtung eingeklemmt. Auch eine umgekehrte Ausbildung, also das Vorsehen von Rastfortsätzen in der oberen Werkzeugvorrichtung und entsprechenden Vertiefungen in der Klemmvorrichtung ist selbstverständlich möglich.

Weiter kann es von Vorteil sein, wenn bei einer erfindungsgemäßen Herstellvorrichtung die untere Werkzeugvorrichtung relativ zur oberen Werkzeugvorrichtung bewegbar ist. Diese untere Werkzeugvorrichtung ist derart ausgestaltet, dass sie einen Träger aufnehmen kann, um mit einem aufgenommenen Träger diesen an der, an dem ersten Flächenabschnitt angelegten Basisdekorschicht anzulegen. Das Anlegen der Basisdekorschicht am ersten Flächenabschnitt erfolgt in einer Weise, dass eine Trägernut im Träger mit der Position des Konturgebers korrespondiert, so dass der Konturgeber bei seiner Bewegung von der Konturoberfläche weg in die Trägernut einfahren kann. Mit anderen Worten weist der Träger eine Trägernut auf, welche dafür vorgesehen ist, einen Bewegungsspielraum für den Konturgeber der oberen Werkzeugvorrichtung zu gewährleisten. Dies ist insbesondere dann sinnvoll, wenn in der Basisdekorschicht durch den Konturgeber während seiner Bewegung von der Konturoberfläche weg eine Verformung der Basisdekorschicht unter Ausbildung einer Basisdekorschichtnut stattfindet. Dabei wird die Basisdekorschichtnut durch die Korrespondenz der Bewegungen des Konturgebers und der Lage der Trägemut in dieser Trägernut ausgebildet. Mit anderen Worten liegt die Basisdekorschichtnut nach der Ausbildung durch den Konturgeber innerhalb der Trägernut. Auch für den Fall, dass ein Teil der Zusatzdekorschicht, also insbesondere ein Flächenabschnitt der Zusatzdekorschicht in die Basisdekorschichtnut eingeschoben werden soll, wird durch die Trägernut ein Aufnahmeraum für die Basisdekorschichtnut, wie auch den Abschnitt der Zusatzdekorschicht vorgesehen. Mit anderen Worten bietet der Träger somit eine Aufnahme für den gewünschten geometrischen Abschluss zwischen Zusatzdekorschicht und Basisdekorschicht, wie er voranstehend bereits erläutert worden ist. Dies kann insbesondere dadurch verbessert sein, dass das untere Werkzeug eine Konturoberfläche aufweist, die der Konturoberfläche der oberen Werkzeugvorrichtung zumindest abschnittsweise komplementär ausgebildet ist. Auch ist es möglich, dass die Konturoberfläche des unteren Werkzeugs eine Nut aufweist, in welche die Trägernut des Trägers eingeführt, bzw. aufgenommen werden kann.

Es kann weiter von Vorteil sein, wenn bei einer erfindungsgemäßen Herstellvorrichtung die Unterdruckvorrichtung für die Erzeugung eines Unterdrucks zwischen der Basisdekorschicht und dem ersten Flächenabschnitt der Konturoberfläche der oberen Werkzeugvorrichtung eine zumindest bereichsweise mikroporöse Ausgestaltung der oberen Werkzeugvorrichtung aufweist. Mit anderen Worten kann die obere Werkzeugvorrichtung zumindest einen mikroporösen Abschnitt aufweisen, der derart angeordnet ist, dass dessen Außenseite einen Bereich der Konturoberfläche der oberen Werkzeugvorrichtung bildet.

Dies ist insbesondere dann sinnvoll, wenn die Konturoberfläche Mikrostrukturen, insbesondere feine Mikrostrukturen, wie beispielsweise eine Narbe, die der von Ledermaterialien nachempfunden ist, aufweist. Solche feinen Mikrostrukturen auf die Oberfläche der Basisdekorschicht zu übertragen ist insbesondere dann besonders vorteilhaft durchführbar, wenn ein besonders enges Anliegen der Basisdekorschicht an der Konturoberfläche, also am ersten Flächenabschnitt erfolgt. Durch die mikroporöse Ausgestaltung der oberen Werkzeugvorrichtung, also durch die mikroporösen Öffnungen zur Konturoberfläche hinkann ein im Wesentlichen vollflächiges Anlegen der Basisdekorschicht an dem ersten Flächenabschnitt der Konturoberfläche erfolgen. Das vollflächige Anlegen ermöglicht es, dass auch feine Strukturen, insbesondere Mikrostrukturen in Form einer Narbung, auf die Oberfläche der Konturfolie übertragen, also in diese eingeprägt, beziehungsweise eingepresst werden. Das Einprägen, beziehungsweise Einpressen ist dabei eine plastische Verformung der Oberfläche der Basisdekorschicht und erfolgt vorteilhafterweise durch die Haltekraft, welche ebenfalls durch den Unterdruck auf die Basisdekorschicht aufgebracht wird. Das Einprägen, beziehungsweise das Einpressen, also das Übertragen einer Mikrostruktur von der Konturoberfläche der oberen Werkzeugvorrichtung auf die Basisdekorschicht kann weiter unterstützt werden, wenn beim Anlegen des Trägers, dieser von unten gegen die Basisdekorschicht drückt. Mit anderen Worten ist die Kraftrichtung der Bewegung des Trägers im Wesentlichen entlang der Kraftrichtung der Haltekraft durch die Unterdruckvorrichtung auf die Basisdekorschicht gerichtet.

Auch kann es von Vorteil sein, wenn bei einer erfindungsgemäßen Herstellvorrichtung die Konturoberfläche der oberen Werkzeugvorrichtung zumindest im ersten Abschnitt eine Mikronegativstruktur aufweist zur Erzeugung einer Mikropositivstruktur auf einer Seite der Basisdekorschicht. Dies ist insbesondere in Kombination mit der voranstehend beschriebenen mikroporösen Ausgestaltung der oberen Werkzeugvorrichtung ausgeführt. Diese Mikronegativstruktur dient zum Einprägen einer Mikropositivstruktur auf der Oberseite der Basisdekorschicht, also auf der Seite, die der Konturoberfläche der oberen Werkzeugvorrichtung zugewandt ist, und welche später im Einsatz eines erfindungsgemäß hergestellten Dekorteils eine Dekoroberfläche, also eine sichtbare Oberfläche des Dekorteils darstellt, d.h. eine Sichtseite.

Die voranstehend beschriebenen Ausführungen zur mikroporösen Ausgestaltung der oberen Werkzeugvorrichtung, wie auch der Mikronegativstruktur des ersten Flächenabschnitts können in gleicher Weise auch für die Zusatzdekorschicht und den entsprechenden zweiten Flächenabschnitt der Konturoberfläche der oberen Werkzeugvorrichtungen ausgeführt sein. Insbesondere, wenn es sich bei dem Zusatzdekorschicht ebenfalls um ein einfacheres Material, also beispielsweise eine Kunststofffolie handelt, die mit einer Oberflächenstruktur versehen werden soll, kann in gleicher Weise auch diese erzeugt werden.

Ein weiterer Gegenstand der vorliegenden Erfindung ist ein Verfahren zum Herstellen eines Dekorteils bei dem ein Träger, eine Basisdekorschicht und eine Zusatzdekorschicht zusammengefügt und umgeformt werden.

Ein solches Verfahren weist die folgenden Schritte auf:
- Anlegen einer Zusatzdekorschicht an einem zweiten Flächenabschnitt einer Konturoberfläche einer oberen Werkzeugvorrichtung,
- Erzeugen eines Unterdrucks zwischen der angelegten Zusatzdekorschicht und dem zweiten Flächenabschnitt der Konturoberfläche,
- Anlegen einer Basisdekorschicht an einem ersten Flächenabschnitt der Konturoberfläche der oberen Werkzeugvorrichtung, der an dem zweiten Flächenabschnitt angrenzt,
- Erzeugen eines Unterdrucks zwischen der angelegten Basisdekorschicht und dem ersten Flächenabschnitt der Konturoberfläche,
- Bewegen von zumindest einem Konturgeber aus einer eingefahrenen Stellung in eine ausgefahrene Stellung zur unter Ausbildung einer Basisdekorschichtnut in der Basisdekorschicht,
- Anlegen eines Trägers an die Seite der Basisdekorschicht, die die entgegengesetzte Seitenfläche zu der an der Konturoberfläche anliegenden Seitenfläche ist, zur flächigen Verbindung der Basisdekorschicht mit dem Träger und/oder der Basisdekorschicht mit die Zusatzdekorschicht und/oder die Zusatzdekorschicht mit dem Träger.

Das voranstehende Verfahren kann beispielsweise unter Verwendung einer erfindungsgemäßen Herstellvorrichtung durchgeführt werden. Entscheidend ist es, dass bei einem erfindungsgemäßen Verfahren der zweite Flächenabschnitt ohne eigenen Träger für das Dekorteil verwendet werden kann. So ist es möglich, dass die Zusatzdekorschicht mit der Basisdekorschicht und/oder mit dem gemeinsamen Träger für die Basisdekorschicht und die Zusatzdekorschicht flächig verbunden werden. Durch das Einlegen der Zusatzdekorschicht und das Erzeugen des entsprechenden Unterdrucks wird die Zusatzdekorschicht in der gewünschten Position fixiert. Das Gleiche erfolgt mit der Basisdekorschicht durch ein entsprechendes Anlegen des Unterdrucks. Wenigstens ein Konturgeber erzeugt dabei die Basisdekorschichtnut in der Basisdekorschicht. Dabei ist der Konturgeber vorteilhafterweise im Wesentlichen vollständig um den zweiter Flächenabschnitt herum laufend ausgebildet. Der Konturgeber kann selbstverständlich einzelne Bestandteile aufweisen, die voneinander unabhängig oder aber auch gemeinsam bewegbar sind. Mit anderen Worten wird damit auch die Basisdekorschichtnut im Wesentlichen vollständig umlaufend um die Zusatzdekorschicht ausgebildet. Damit kann zumindest ein Flächenabschnitt der Zusatzdekorschicht auch umlaufend in diese Basisdekorschichtnut mit eingeführt werden, sodass um die Zusatzdekorschicht umlaufend ein optisch ansprechender Abschluss, also eine saubere Kante zwischen der Basisdekorschicht und der Zusatzdekorschicht erzeugt wird.

Ansonsten weist ein erfindungsgemäßes Verfahren die gleichen Vorteile auf, wie sie bereits für eine erfindungsgemäße Herstellvorrichtung erläutert worden sind. Insbesondere kann auf einen zusätzlichen Schritt zur Erzeugung einer separaten Zusatzdekorschicht mit eigenem Träger verzichtet werden. Auch dieser separate Träger kann wegfallen, wodurch Materialeinsparungen möglich werden. Nicht zuletzt ist das erfindungsgemäße Verfahren dahingehend vorteilhaft, dass in einem einzigen Schritt sowohl die Herstellung der einzelnen Teile wie Basisdekorschicht und Zusatzdekorschicht, wie auch deren Kombination stattfindet. Auf diese Weise ist die Produktionszeit im Vergleich zu bekannten Herstellverfahren deutlich reduziert.

Dabei ist im ersten Schritt unerheblich, ob die Zusatzdekorschicht vollflächig auf der Basisdekorschicht zu Liegen kommt, also von dieser unterstützt wird, beziehungsweise von dieser auf der Hinterseite abgedeckt wird, oder ob die Basisdekorschicht einen Ausschnitt aufweist, sodass die Zusatzdekorschicht auf seiner Rückseite direkt auf dem Träger zu Liegen kommt. Letzteres kann insbesondere im Hinblick auf Gewichtseinsparung, beziehungsweise Dickenreduzierung vorteilhaft sein. Jedoch kann es auch vorteilhaft sein, den Aufwand einer vorherigen Beschneidung der Basisdekorschicht zu vermeiden und die Basisdekorschicht vollflächig hinter die Zusatzdekorschicht vorzusehen. Auf diese Weise können Standarddekorschichten verwendet werden, was ein erfindungsgemäßes Verfahren in Kostensicht noch besser macht.

Ein erfindungsgemäßes Verfahren kann vorteilhafterweise dahingehend weitergebildet sein, dass jeweils vor dem Anlegen der Basisdekorschicht am erster Flächenabschnitt und/oder vor dem Anlegen des Trägers an der Basisdekorschicht, beziehungsweise der Zusatzdekorschicht, die Basisdekorschicht und/oder der Träger zumindest teilweise erwärmt werden. Die Temperaturen dieser Erwärmung sind insbesondere im Bereich zwischen 180 und 220° Celsius. Die bevorzugte Temperatur ist dabei um 200° Celsius zu wählen. Entscheidend für die Wahl der Temperatur und die Art der Erwärmung ist dabei, dass der entsprechende Flächenabschnitt der Basisdekorschicht beziehungsweise des Trägers, der mit einer benachbarten Komponente in Berührung kommt, auf die entsprechende Schmelztemperatur gebracht wird. Mit anderen Worten kann auf diese Weise eine stoffschlüssige Verbindung zwischen den jeweiligen Komponenten, also zwischen dem Träger und der Basisdekorschicht, zwischen der Basisdekorschicht und der Zusatzdekorschicht, beziehungsweise zwischen dem Träger und der Zusatzdekorschicht hergestellt werden.

Um voranstehendes zu erzielen und damit auf die Notwendigkeit eines Klebers vollständig verzichten zu können, ist es vorteilhaft, wenn die Basisdekorschicht im Wesentlichen durchgängig erwärmt wird. Mit anderen Worten wird die Basisdekorschicht plastifiziert, also durchgehend soweit aufgeschmolzen, dass sie auf beiden Seiten stoffschlüssige Verbindungen eingehen kann. Durch das Anlegen einer derart angeschmolzenen Basisdekorschicht an einer Zusatzdekorschicht, reicht die Wärme, die in der Basisdekorschicht im angewärmten Zustand gespeichert ist, aus, um auch die Zusatzdekorschicht soweit anzuschmelzen, dass diese zumindest auf ihrer Unterseite eine stoffschlüssige Verbindung zwischen sich selbst und der Basisdekorschicht eingehen kann. Um dies zu ermöglichen, kann es vorteilhaft sein, wenn die Zusatzdekorschicht mehrschichtig aufgebaut ist und zumindest an seiner Unterschicht ein Vlies aus unterschiedlichen Bestandteilen aufweist, wobei ein Bestandteil Fasern aus Polypropylen sein kann. Die Schicht selbst weist dabei hauptsächlich als Bestandteil Polyolefin, zum Beispiel thermoplastisches Olefin (TPO), auf, wobei die Deckschicht, also das Polyolefin der Deckschicht im angeschmolzenen Zustand durch dessen Temperatur angeschmolzene Polypropylenfasern des Vlieses der Zusatzdekorschicht mit sich selbst verschmelzen kann und damit eine stoffschlüssige Verbindung eingeht.

Durch das Anschmelzen des Trägers, welches ausschließlich an der Oberseite bzw. Sichtseite erfolgen kann, kann im Wesentlichen ähnlicher Weise eine stoffschlüssige Verbindung zwischen dem Träger und der Zusatzdekorschicht, beziehungsweise zwischen dem Träger und der Basisdekorschicht ausgebildet werden. Dabei ist die Basisdekorschicht ebenfalls vorteilhafterweise zweischichtig ausgebildet, sodass dessen Unterschicht eine Schaumschicht aufweist, die im Wesentlichen aus Polyolefin, beispielsweis aus thermoplastischem Olefin (TPO) gebildet ist. Diese Schaumschicht soll im fertigen Dekorteil eine verbesserte Haptik des Dekorteils im Bereich der Basisdekorschicht erzeugen. Diese Schaumschicht befindet sich bereits durch das Anschmelzen der Kunststofffolie im plastifizierten Zustand, sodass sie durch das Anpressen des Trägers, der ebenfalls vorher angewärmt, bzw. plastifiziert worden ist, mit Polypropylen des Trägers stoffschlüssig verbunden werden kann. Nach dem Abkühlen entsteht also ein im Wesentlichen vollständig miteinander verschmolzenes Bauteil, wobei die entsprechenden Kontaktflächen eine stoffschlüssige Verbindung über das Aufschmelzen und anschließende Erkalten eingegangen sind.

Es kann vorteilhaft sein, wenn bei einem erfindungsgemäßen Verfahren der Konturgeber zumindest einen Abschnitt der Zusatzdekorschicht in die Basisdekorschichtnut bei deren Erzeugung hinein bewegt. Durch das Hineinschieben eines Flächenabschnitts der Zusatzdekorschicht werden dessen Randbereiche sozusagen in der Basisdekorschichtnut versteckt. Insbesondere bei natürlichen Zusatzdekorschichten, wie beispielsweise Stoff oder Leder, sind gerade diese Randbereiche durch vorangehende Verfahren häufig optisch nicht den notwendigen Qualitätskriterien entsprechend. So müssen solche Zusatzdekorschichten häufig auf das gewünschte Maß zugeschnitten werden, beziehungsweise werden sie an den Randabschnitten für die einzelnen Verfahrensschritte gegriffen und damit abgenutzt. Exakt diese Randabschnitte werden durch das Bewegen in die Basisdekorschichtnut vor optischer Zugänglichkeit versteckt, sodass keine optische Beeinträchtigung durch diese Randabschnitte erfolgt. Mit anderen Worten können durch die Anwendung eines erfindungsgemäßen Verfahrens auch voranstehende Verfahrensschritte unter Bearbeitung der Zusatzdekorschicht kostengünstiger und einfacher ausgestaltet werden, da für diese Randbereiche keine Rücksicht auf deren optische Qualität genommen werden muss.

Es kann vorteilhaft sein, dass für ein erfindungsgemäßes Verfahren eine erfindungsgemäße Herstellvorrichtung zum Einsatz kommt, da auf diese Weise die einzelnen Verfahrensschritte besonders einfach und kostengünstig durchgeführt werden können. Vorzugsweise weist die verwendete Herstellvorrichtung wenigstens auf:
eine mit einer unteren Werkzeugvorrichtung zusammenwirkende obere Werkzeugvorrichtung, die eine formgebende Konturoberfläche zum Umformen aufweist, wobei die Konturoberfläche zumindest einen ersten Flächenabschnitt zur Aufnahme der Basisdekorschicht und zumindest einen daran angrenzenden zweiten Flächenabschnitt zur Aufnahme der Zusatzdekorschicht aufweist,
eine in der oberen Werkzeugvorrichtung angeordnete Unterdruckvorrichtung, welche derart ausgestaltet ist, dass zwischen dem zweitem Flächenabschnitt und einer aufgenommenen Zusatzdekorschicht und/oder zwischen dem erstem Flächenabschnitt und einer aufgenommenen Basisdekorschicht ein Unterdruck erzeugt werden kann,
wobei am oder entlang des Randes des zweiten Flächenabschnitts zumindest abschnittsweise wenigstens ein Konturgeber angeordnet ist, der zwischen einer eingefahrenen und einer ausgefahrenen Stellung bewegbar ist, wobei in der ausgefahrenen Stellung eine Anlagefläche des Konturgebers über den Verlauf der Konturoberfläche übersteht zur Ausbildung einer Basisdekorschichtnut in der Basisdekorschicht.

Ein weiterer Gegenstand der vorliegenden Erfindung ist ein Dekorteil, aufweisend einen Träger mit einer Trägernut, eine mit einer Seitenfläche des Trägers flächig verbundene Basisdekorschicht mit einer Basisdekorschichtnut, die sich in die Trägernut erstreckt, sowie eine Zusatzdekorschicht, die flächig mit der Basisdekorschicht und/oder mit der Seitenfläche des Trägers verbunden und zumindest mit einem Randabschnitt in der Basisdekorschichtnut gelegen ist. Ein erfindungsgemäßes Dekorteil kann beispielsweise mit einem erfindungsgemäßen Verfahren und/oder mit einer erfindungsgemäßen Herstellvorrichtung produziert worden sein. Durch das Anordnen der Basisdekorschicht in der Basisdekorschichtnut und das anschließende Anordnen eines Abschnitts der Zusatzdekorschicht in der entsprechenden Basisdekorschichtnut werden die gleichen Vorteile erzielt, wie sie ausführlich hinsichtlich eines erfindungsgemäßen Verfahrens und einer erfindungsgemäßen Herstellvorrichtung erläutert worden sind. Insbesondere kann auf diese Weise ein optisch sauberer Abschluss zwischen Zusatzdekorschicht an dessen Oberfläche und Basisdekorschicht an deren Oberfläche erzielt werden.

Vorteilhafterweise wurde das Dekorteil durch Zusammenfügen und Umformen eines Träger, einer Basisdekorschicht und einer Zusatzdekorschicht gebildet ist. Dabei wurden zum Zusammenfügen und Umformen die folgenden Schritte durchgeführt:
- die Zusatzdekorschicht wurde an einem zweiten Flächenabschnitt einer Konturoberfläche einer oberen Werkzeugvorrichtung angelegt,
- zwischen der angelegten Zusatzdekorschicht und dem zweiten Abschnitt der Konturoberfläche wurde Unterdruck erzeugt,
- die Basisdekorschicht wurde an einem ersten Flächenabschnitt der Konturoberfläche der oberen Werkzeugvorrichtung angelegt, der an dem zweiten Flächenabschnitt angrenzt,
- zwischen der angelegten Basisdekorschicht und dem ersten Flächenabschnitt der Konturoberfläche wurde Unterdruck erzeugt,
- zumindest ein Konturgeber wurde aus einer eingefahrenen Stellung in eine ausgefahrene Stellung zur Ausbildung einer Basisdekorschichtnut in der Basisdekorschicht bewegt,
- der Trägers wurde an die Seite der Basisdekorschicht, die die entgegengesetzte Seitenfläche zu der an der Konturoberfläche anliegenden Seitenfläche ist, zur flächigen Verbindung der Basisdekorschicht mit dem Träger und/oder der Basisdekorschicht mit die Zusatzdekorschicht und/oder die Zusatzdekorschicht mit dem Träger angelegt.

Weiter kann es vorteilhaft sein, wenn zumindest die Zusatzdekorschicht eine elastisch komprimierbare Schaumschicht aufweist. Diese elastisch komprimierbare Schaumschicht hat unter anderem den Vorteil, dass sie im Laufe des Verfahrens, also beim Einsatz einer erfindungsgemäßen Herstellvorrichtung oder bei der Durchführung eines erfindungsgemäßen Verfahrens unterschiedliche Komprimierungszustände einnimmt. Beim Anlegen eines Unterdrucks in der oberen Werkzeugvorrichtung wird dementsprechend die Zusatzdekorschicht entgegen dem Zweiten Abschnitt der Konturoberfläche gedrückt, also von der Haltekraft, die durch den Unterdruck erzeugt wird, gegen diesen gepresst. Dieses Pressen resultiert in einer Komprimierung des Schaums, also der Schaumschicht. Mit anderen Worten wird die Zusatzdekorschicht in seiner Gesamterstreckung hinsichtlich seiner Dicke dünner. Gleiches geschieht auch durch die Bewegung des Konturgebers bei der Erzeugung der Basisdekorschichtnut. Anschließend, nachdem durch den Konturgeber die Basisdekorschichtnut erzeugt worden ist und der komprimierte Zusatzdekorschicht zumindest abschnittsweise in die Basisdekorschichtnut eingeschoben wurde, kann das Dekorteil entformt werden und dabei insbesondere der Unterdruck abgesetzt werden, bzw. der Konturgeber wieder aus der Basisdekorschichtnut herausgefahren werden. Nach Belüften des Bereichs zwischen dem Zusatzdekorschicht und der Konturoberfläche wird die Kompression der Schaumschicht der Zusatzdekorschicht aufgehoben, sodass diese expandieren kann. Mit anderen Worten wird die Zusatzdekorschicht dicker. Damit ist es möglich, dass die Zusatzdekorschicht auch in der Basisdekorschichtnut dicker wird, und insbesondere diese schließt. So ist es notwendig, dass der Konturgeber zumindest abschnittsweise in die Basisdekorschichtnut einfährt, und nach dem anschließenden Verlassen des Konturgebers diese Basisdekorschichtnut größer ist, als die Ausprägung hinsichtlich der Dicke der Zusatzdekorschicht. Durch das anschließende Expandieren der Schaumschicht kann dieser verbleibende Spalt zwischen Zusatzdekorschicht und einer Innenwandung der entstandenen Basisdekorschichtnut zumindest abschnittsweise ausgeglichen werden. Ein erfindungsgemäßes Dekorteil ist dahingehend noch weiter verbessert, dass kein Spalt verbleibt, welcher die Optik beeinträchtigen würde, oder dazu tendieren würde Schmutz aufzunehmen.

Die vorliegende Erfindung wird näher erläutert mit Bezug auf die beigefügten Zeichnungsfiguren. Die dabei verwendeten Begriffe "links", "rechts", "oben" und "unten" beziehen sich dabei auf eine Ausrichtung der Zeichnungsfiguren mit normal lesbaren Bezugszeichen. Es zeigen:
- Figur 1: eine erfindungsgemäße Herstellvorrichtung in einem ersten Schritt eines erfindungsgemäßen Verfahrens
- Figur 2: die Herstellvorrichtung der Figur 1 in einem nächsten Schritt des Verfahrens
- Figur 3: die Herstellvorrichtung der Figuren 1 und 2 in einem weiteren Schritt des Verfahrens
- Figur 4: die Herstellvorrichtung der Figuren 1 bis 3 nach einem weiteren Schritt des erfindungsgemäßen Verfahrens
- Figur 5: die Herstellvorrichtung der Figuren 1 bis 4 nach einem weiteren Schritt des erfindungsgemäßen Verfahrens
- Figur 6: die Herstellvorrichtung der Figuren 1 bis 5 in einem weiteren Schritt eines erfindungsgemäßen Verfahrens
- Figur 7: ein durch das Verfahren, beziehungsweise die Vorrichtung der Figuren 1 bis 7 hergestelltes Dekorteil
- Figur 8: im Detailausschnitt einen Konturgeber einer ersten Ausführungsform
- Figur 9: der Konturgeber der Figur 8 im ausgefahrenen Zustand
- Figur 10: der Konturgeber der Figuren 8 und 9 in einem weiteren Zustand
- Figur 11: der Konturgeber der Figuren 8 bis 10 in einem weiteren Zustand
- Figur 12a: eine Ausführungsform der Schichten eines Zusatzdekorschicht
- Figur 12b: eine Ausführungsform der Schichten einer Basisdekorschicht
- Figur 13: eine Ausführungsform eines Zusatzdekorschicht mit einer Schaumschicht im komprimierten Zustand
- Figur 14: die Zusatzdekorschicht der Figur 13 im expandierten Zustand
- Figur 15: eine Ausführungsform einer Dichtvorrichtung zwischen Klemmvorrichtung und oberer Werkzeugvorrichtung

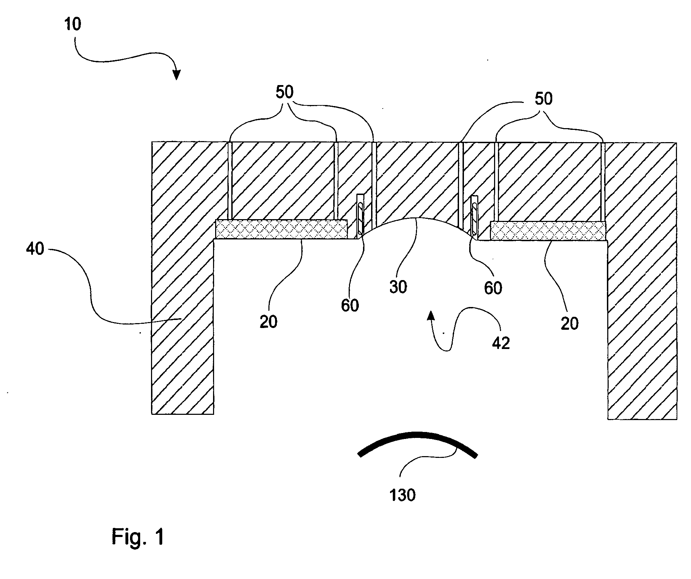

In Figur 1 ist eine erste Ausführungsform einer erfindungsgemäßen Herstellvorrichtung 10 dargestellt. Diese Herstellvorrichtung 10 weist eine obere Werkzeugvorrichtung 40 auf. Diese obere Werkzeugvorrichtung 40 ist nach unten geöffnet, und weist eine Konturoberfläche 42 auf. Diese Konturoberfläche 42 weist dabei zwei erste Flächenabschnitte 20 und einen zweiten Flächenabschnitt 30 auf. Es kann sich bei der Konturoberfläche 42 sowohl um eine rechteckige, wie auch um eine runde Fläche handeln. So ist es möglich, dass die beiden ersten Flächenabschnitte 20 hinter der Querschnittsebene der Figur 1, beziehungsweise vor der Querschnittsebene der Figur 1 einen gemeinsamen ersten Flächenabschnitt 20 bilden, der den zweiten Flächenabschnitt 30 im Wesentlichen vollständig umgibt. Zwischen dem zweitem Flächenabschnitt und dem erstem Flächenabschnitt 30 sind jeweils Konturgeber 60 in Vertiefungen in der oberen Werkzeugvorrichtung 40 vorgesehen. Diese Konturgeber 60 befinden sich in der Figur 1 im nicht ausgefahrenen Zustand, und können wie später noch ausführlich erläutert wird, zum Einsatz kommen um eine Verformung einer Basisdekorschicht und/oder einer Zusatzdekorschicht durchführen zu können.

Weiter sind in der oberen Werkzeugvorrichtung 40 Unterdruckkanäle einer Unterdruckvorrichtung 50 vorgesehen. Diese Unterdruckvorrichtung 50 weist in der Figur 1 insgesamt sechs Kanäle auf, wobei zwei Kanäle im direkten Kontakt über jeweils eine Öffnung mit dem zweiten Abschnitt 30 stehen. Jeweils zwei Kanäle pro ersten Flächenabschnitt 20 stehen über eine mikroporöse Struktur mit diesem ersten Flächenabschnitt 20 in fluidkommunizierender Verbindung. Selbstverständlich können für jeden Flächenabschnitt 20 und 30 auch eine davon unterschiedliche Anzahl von Kanälen vorgesehen sein. Die mikroporöse Struktur ist dabei nur in einem Bereich der oberen Werkzeugvorrichtung 40 vorgesehen, um den Kostenaufwand für diese mikroporöse Struktur möglichst gering zu halten. Die mikroporöse Struktur ist als kreuzweise Struktur ausgebildet und kann auch ein separater Einsatz in der oberen Werkzeugvorrichtung sein. Die fluid-kommunizierende Verbindung über den Rest des Querschnitts der oberen Werkzeugvorrichtung 40 ist dabei ebenfalls über Kanäle der Unterdruckvorrichtung 50 dargestellt. Nicht aus Figur 1 zu entnehmen ist die Verbindung der Unterdruckvorrichtung 50 mit einer Vakuumpumpe, welche Unterdruck, also die Absaugung von Luft, vornehmen kann.

Unterhalb der oberen Werkzeugvorrichtung 40 ist eine Zusatzdekorschicht 130 dargestellt. Diese Zusatzdekorschicht 130 ist zwar bereits vorgeformt dargestellt, befindet sich jedoch noch in einem im Wesentlichen flexiblen Zustand. Insbesondere bei einer Ausführungsform als Stoff oder Leder für die Zusatzdekorschicht 130 ist keine stabile Form der Zusatzdekorschicht 130 in der Situation der Figur 1 zu erwarten.

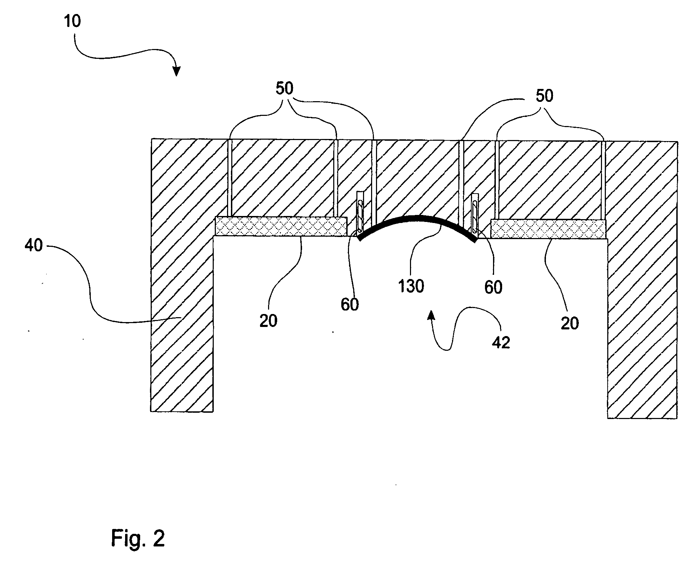

Die Zusatzdekorschicht 130 wird in einem ersten Schritt am zweiten Flächenabschnitt 30 angelegt, sodass eine Situation entsteht wie sie in Figur 2 dargestellt ist, in der die Seite der Zusatzdekorschicht 130, die später einen Teil einer Sichtseite des fertiggestellten Dekorteils 100 bildet, an der Konturoberfläche 42 anliegt. Darüber hinaus wird in einem zweiten Schritt über die mittleren Kanäle der Unterdruckvorrichtung 50 ein Vakuum angelegt, sodass die Zusatzdekorschicht 130 am zweiten Abschnitt 30 angelegt gehalten wird, also über einen Unterdruck angesaugt bleibt.

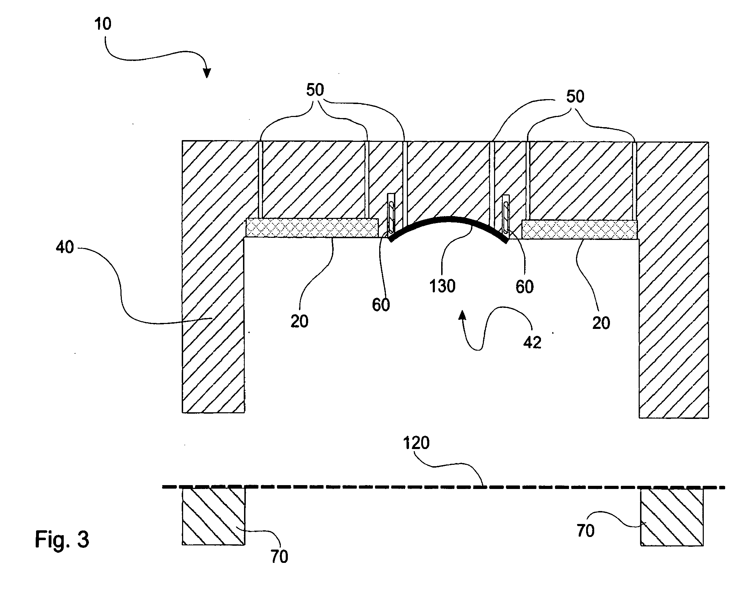

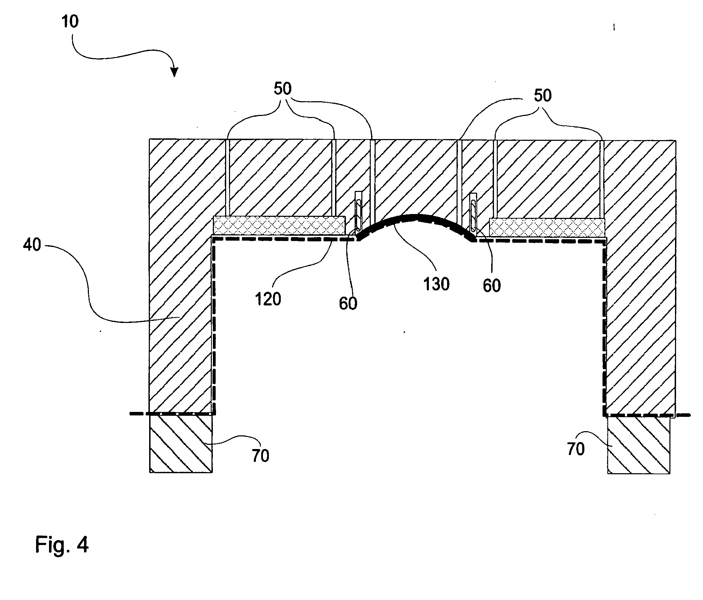

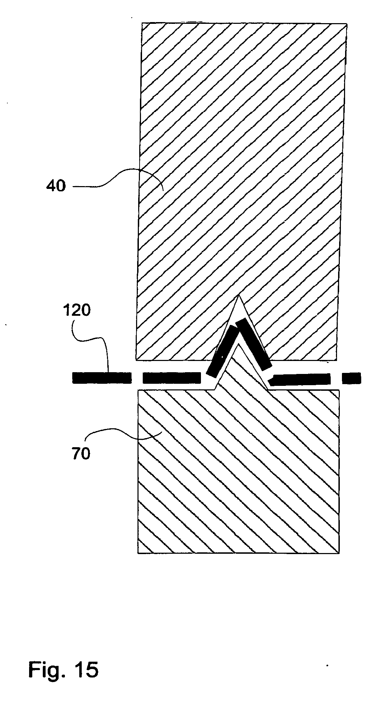

In einem anschließenden Schritt, wie in Figur 3 dargestellt, wird eine Klemmvorrichtung 70 verwendet, um eine gespannte Basisdekorschicht 120 zuzuführen. Die Klemmvorrichtung 70 ist dabei rein schematisch dargestellt. Es ist möglich, dass einzelne Spannelemente vorgesehen sind, welche die Basisdekorschicht 120 in der gespannten Situation wie in Figur 3 dargestellt, halten. Auch ist es möglich, dass die Spannung der Basisdekorschicht 120 erst im Zusammenspiel mit der oberen Werkzeugvorrichtung 40 erfolgt, wie dies zum Beispiel der Figur 15 zu entnehmen ist. Die Klemmvorrichtung 70 und die obere Werkzeugvorrichtung 40 sind relativ zueinander bewegbar ausgebildet und können insbesondere aus ihren in Figur 3 dargestellten Positionen zueinander bewegt werden, bis eine Kontaktierung der Basisdekorschicht 120 mit der oberen Werkzeugvorrichtung 40 stattfindet, wie dies beispielsweise in Figur 4 gezeigt ist, in der die Seite der Basisdekorschicht 120, die später auch einen Abschnitt der Sichtseite des fertiggestellten Dekorteils 100 bildet, an der Konturoberfläche 42 anliegt. Nach dieser Kontaktierung wird der Luftraum zwischen Basisdekorschicht 120 und Konturoberfläche 42 der oberen Werkzeugvorrichtung 40 in einem weiteren Schritt evakuiert, wobei dies über die Unterdruckvorrichtung 50 durchgeführt wird. Dabei wird Luft über die mikroporösen Strukturen und die dahinter liegenden Kanäle abgesaugt, sodass ein Unterdruck zwischen Basisdekorschicht 120 und der Konturoberfläche 42 entsteht. Über diesen Unterdruck wird eine Kraft auf die Basisdekorschicht 120 ausgeübt, sodass diese in Richtung der Konturoberfläche 42 gesaugt wird. Das Evakuieren wird solange durchgeführt, bis die Basisdekorschicht 120 im Wesentlichen vollständig an den ersten Flächenabschnitten 20 beziehungsweise dem Rest der Konturoberfläche 42 anliegt. Nach dem Anlegen der Basisdekorschicht 120 an den ersten Flächenabschnitten 20 beziehungsweise der Konturoberfläche 42 ist ein Zustand erreicht, wie er in Figur 4 dargestellt ist. Es ist auch möglich, dass die Werkzeugvorrichtung 40 vollständig oder zu einem sehr großen Teil mikroporös ist.

In dem Zustand der Figur 4 werden die Basisdekorschicht wie auch die Zusatzdekorschicht ausschließlich durch den Unterdruck in der gewünschten Position gehalten. Dabei kann es sein, dass durch den Unterdruck bereits plastische Verformungen der Basisdekorschicht 120 und/oder der Zusatzdekorschicht 130 durchgeführt worden sind, um die gewünschte finale Form des Dekorteils 100 zu erzeugen.

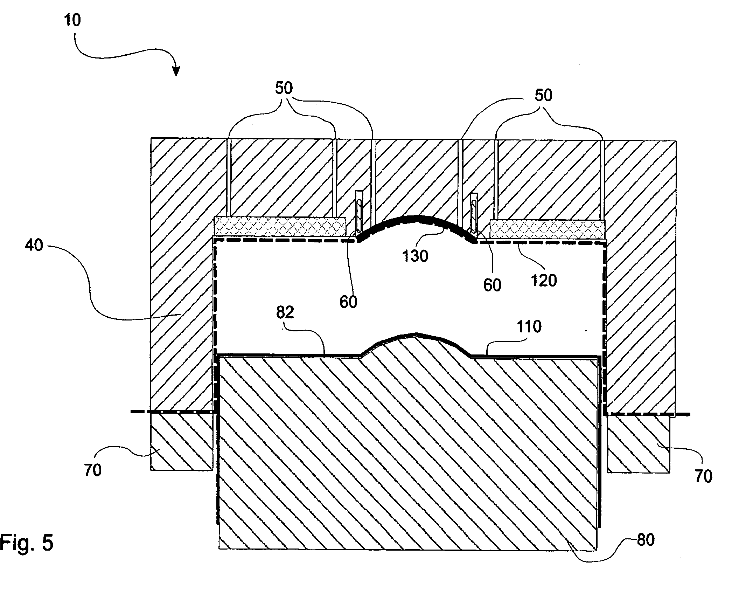

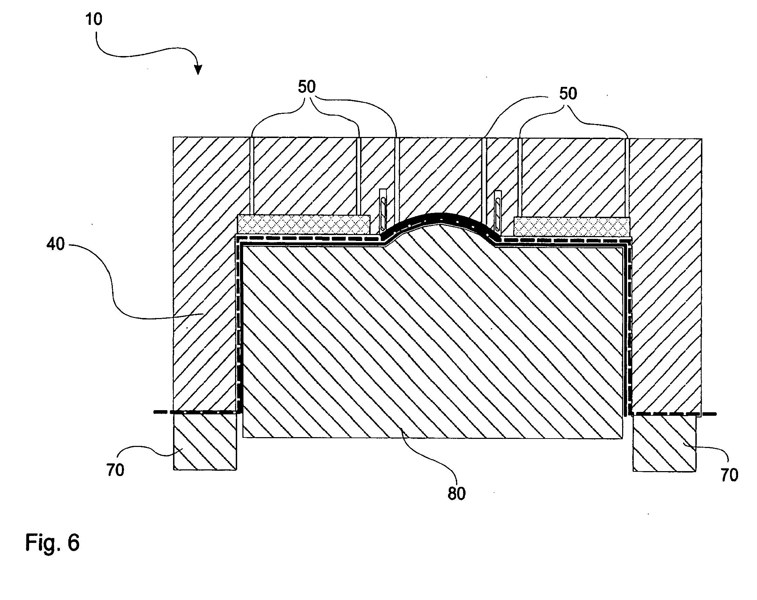

Figur 5 zeigt nun, wie in einem weiteren Schritt ein zur Unterstützung vorgesehene Träger 110 in die obere Werkzeugvorrichtung 40 eingefahren wird. Dafür ist eine untere Werkzeugvorrichtung 80 vorgesehen, auf welcher der Träger 110 aufgesetzt ist. Das Einfahren erfolgt in der Weise, dass die untere Werkzeugvorrichtung 80 an die entsprechende Öffnung der oberen Werkzeugvorrichtung 40 angepasst ist, sodass der vorgeformte Träger 110 eingefahren werden kann. Der eingefahrene Zustand des Trägers 110 ist in Figur 6 dargestellt. Dort unterstützt durch sein Anlegen der Träger 110 die Basisdekorschicht 120 und damit indirekt die auf der Basisdekorschicht 120 liegende Zusatzdekorschicht 130. In Figur 6 kann dabei vorteilhafterweise zusätzlich die untere Werkzeugvorrichtung 80 nach oben gedrückt werden, sodass ein Anpressdruck des Trägers 110 an der Basisdekorschicht 120 und damit auch indirekt an der Zusatzdekorschicht 130 erfolgt. Damit wird eine Mikrostruktur, welche auf der Oberfläche des ersten Flächenabschnitts 20 der oberen Werkzeugvorrichtung 40 vorhanden ist, in die Oberseite der Basisdekorschicht 120 eingeprägt. Die dafür notwendige Kraft wird sowohl durch die entsprechenden Haltekräfte die durch Unterdruck der Unterdruckvorrichtung 50 erzeugt werden, wie auch durch das Anpressen des Trägers 110 mittels der unteren Werkzeugvorrichtung 80 erzielt. Es kann jedoch auch vorteilhaft sein, wenn in der Situation der Figur 6 der Unterdruck der Unterdruckvorrichtung 50 bereits abgeschaltet werden konnte, sodass die notwendige Unterstützung und auch der notwendige Druck ausschließlich durch die untere Werkzeugvorrichtung 80 über den Träger 110 aufgebracht werden.

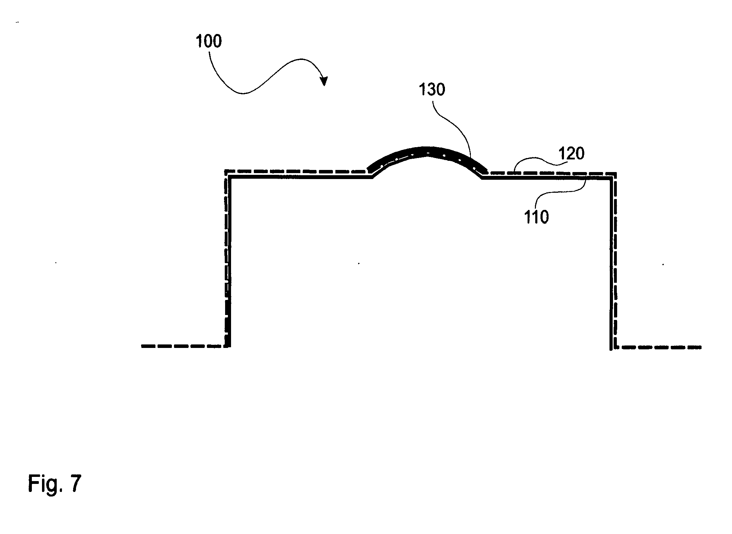

In Figur 7 ist das fertige Dekorteil 100 dargestellt. Hier wurde die flächige Verbindung zwischen der Zusatzdekorschicht 130 und der Basisdekorschicht 120, beziehungsweise zwischen der Basisdekorschicht 120 und dem Träger 110 durchgeführt. Um die flächige Verbindung zwischen der Zusatzdekorschicht 130 und der Basisdekorschicht 120, beziehungsweise zwischen der Basisdekorschicht 120 und dem Träger 110 zu erzeugen, kann es vorteilhaft sein, wenn ein Klebstoff verwendet wird. Jedoch kann es auch vorteilhaft sein, wenn die Basisdekorschicht 120 vor dem Ansaugen an den ersten Abschnitt 20 erwärmt worden ist. Dies kann insbesondere bereits nach dem Spannen in der Klemmvorrichtung 70 erfolgt sein, und derart ausgebildet sein, dass die Basisdekorschicht 120 im Wesentlichen vollständig plastifiziert ist, was beispielsweise bei 180 bis 220°C der Fall ist. Auch der Träger 110 kann insbesondere nachdem er auf die untere Werkzeugvorrichtung 80 aufgesetzt worden ist, zumindest abschnittsweise, insbesondere auf dessen zur Basisdekorschicht 120 hin gerichteten Oberseite, angeschmolzen worden sein.

Dabei besteht der Träger 110 vorteilhafterweise aus einer Polypropylen (PP)-Struktur, während die Basisdekorschicht 120 vorteilhafterweise mehrschichtig, insbesondere aus thermoplastischen Polyolefinen aufgebaut ist. Die Zusatzdekorschicht 130 selbst weist dabei vorteilhafterweise zumindest eine rückseitige, also zur Basisdekorschicht 120 und dem Träger 110 hin gerichtete Seite mit einer Schicht auf, die vliesartig, insbesondere mit Polypropylenfasern, ausgestaltet ist. Durch die Ausgestaltung eines Polypropylen, beziehungsweise thermoplastisches Olefin kann durch das Plastifizieren des Trägers 110, beziehungsweise der Basisdekorschicht 120 auch ein Anschmelzen der Zusatzdekorschicht 130 auf dessen Rückseite, also auf der zur Basisdekorschicht 120 zugewandten Seite, erfolgen. Nach anschließendem Erkalten bildet sich auf diese Weise ein stoffschlüssiger Verbund in flächiger Weise zwischen der Zusatzdekorschicht 130 und der Basisdekorschicht 120 sowie der Basisdekorschicht 120 und dem Träger 110. Bei einer derartigen Ausführungsform eines erfindungsgemäßen Verfahrens ist kein Kleber mehr notwendig.

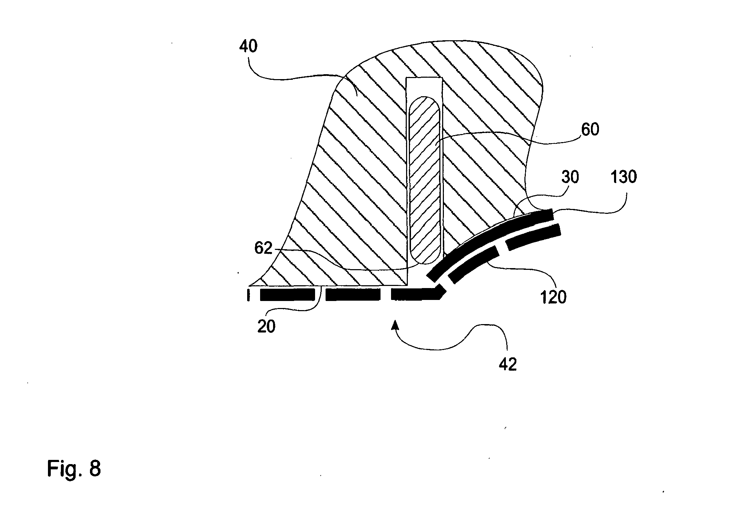

Anhand der folgenden Figuren soll die Funktionsweise eines erfindungsgemäßen Konturgebers 60 erläutert werden. Dabei ist eine Situation dargestellt, in welcher die Zusatzdekorschicht 130 bereits an einem zweiten Abschnitt 30 der oberen Werkzeugvorrichtung 40 angelegt ist. Dies kann beispielsweise durch das Absaugen mittels einer Unterdruckvorrichtung 50 wie dies in den einleitenden Figuren erläutert worden ist, erfolgt sein. Darüber hinaus ist bereits das Basisdekorschicht 120 an dem zugehörigen ersten Flächenabschnitt 20 der Konturoberfläche 42 der oberen Werkzeugvorrichtung 40 angelegt. In diesem Fall hat die Basisdekorschicht 120 keinen Ausschnitt für die Zusatzdekorschicht 130, sondern liegt vielmehr vollflächig an der Rückseite derselben an. Der Konturgeber 60 befindet sich in Figur 8 noch im eingefahrenen Zustand, in welchem er in der oberen Werkzeugvorrichtung 40 im Wesentlichen vollständig aufgenommen worden ist. In keiner der Figuren dargestellt ist ein für den Konturgeber 60 vorgesehener Bewegungsmechanismus, welcher beispielsweise über Hebelkinematiken oder andere Antriebe, wie beispielsweise Getriebe, Elektromotoren oder magnetische Antriebe, vorgesehen sein kann.

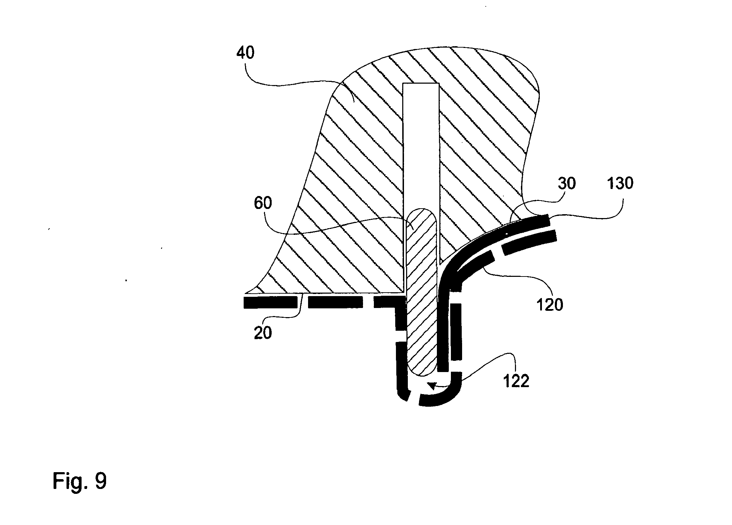

Figur 9 zeigt die Situation, in welcher sich der Konturgeber 60 in ausgefahrener Position befindet. Ausgehend von einer Situation der Figur 8 bewegt sich in einem weiteren Schritt der Konturgeber 60 nach unten und verformt dabei sowohl die Basisdekorschicht 120, wie auch die Zusatzdekorschicht 130. Die Verformung erfolgt dergestalt, dass die Basisdekorschicht 120 durch plastische Verformung eine Nut, insbesondere eine Basisdekorschichtnut 122 ausbildet. In diese Nut fährt sozusagen während der Ausbildung auch der Konturgeber 60, insbesondere dessen Anlagefläche 62, ein. Bei dieser Bewegung und durch die Anordnung der Zusatzdekorschicht 130 in erfindungsgemäßer Weise wie sie in Figur 8 dargestellt ist, wird auch der Randabschnitt der Zusatzdekorschicht 130 mit in die Basisdekorschichtnut 122 eingeführt. Mit anderen Worten wird der Randabschnitt der Zusatzdekorschicht 130 an eine Position bewegt, die nach Beendigung eines erfindungsgemäßen Verfahrens optisch nicht mehr sichtbar ist. Dies geschieht durch die Anordnung des Konturgebers 60 im verbindenden Bereich zwischen den beiden Flächenabschnitten 20 und 30.

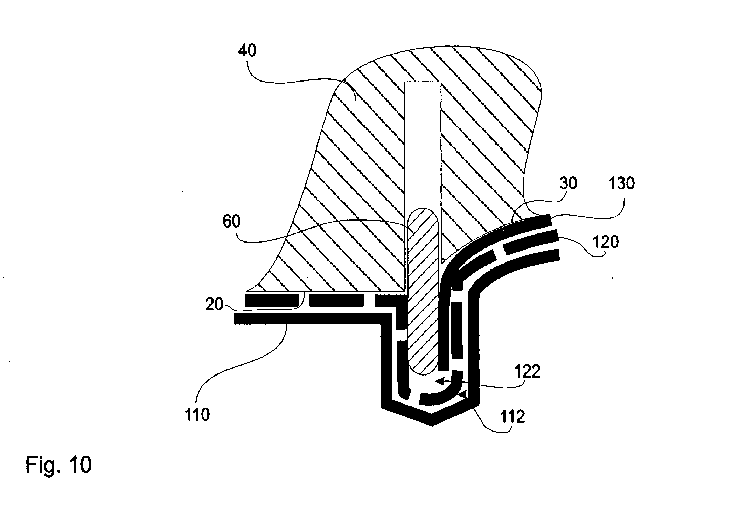

Figur 10 zeigt den anschließenden Verfahrensschritt. So wird das Ausbilden der Basisdekorschichtnut 122 in der Basisdekorschicht 120 durchgeführt, wenn der Träger 110 sich noch nicht in der dafür vorgesehenen Position auf der Rückseite der Basisdekorschicht 120 befindet. Erst nachdem die Basisdekorschichtnut 120 ausgebildet ist, zum Beispiel ca. eine Sekunde nach deren Ausbildung, kann von unten ein Träger 110 in einem weiteren Schritt herangefahren werden, der bereits in vorgefertigter Form eine Trägernut 112 aufweist. Die Trägernut 112 ist dabei derart angeordnet, dass sie beim Einfahren des Trägers 110 bei dessen Anlegen an der Rückseite der Basisdekorschicht 120 mit der Position des Konturgebers 60 und damit auch mit der geometrischen Ausprägung der Basisdekorschichtnut 120 korrespondiert. Diese Korrespondenz drückt sich dadurch aus, dass die Basisdekorschichtnut 120 zumindest abschnittsweise in der Trägernut 112 aufgenommen ist, wie dies Figur 10 zu entnehmen ist. Mit anderen Worten bietet die Trägernut 112 die Möglichkeit trotz der Verformung der Basisdekorschicht 120 ein im Wesentlichen vollflächiges Anlegen des Trägers 110 an der Rückseite der Basisdekorschicht 120 zu ermöglichen.

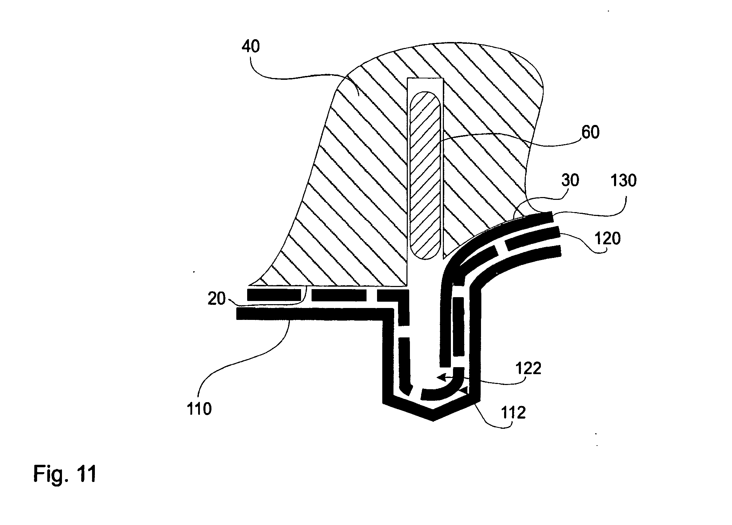

Nach dem Anlegen des Trägers 110 und nach dem anschließenden Erkalten, beziehungsweise nach dem Abwarten der Erstarrung der vollflächigen Verbindung zwischen Träger 110, Basisdekorschicht 120 und Zusatzdekorschicht 130 wird der Konturgeber 60 wieder herausgefahren. Er befindet sich also wie in Figur 11 dargestellt, wieder in der Anfangsposition, also der eingefahrenen Stellung, und ist bereit für den nächsten neuen Verfahrensdurchlauf. Die Nut in der Basisdekorschicht 120, also die Basisdekorschichtnut 120 ist durch plastische Verformung entstanden und verbleibt daher in der verformten Position, wie dies auch für die Zusatzdekorschicht 130 gilt. Damit ist ein sauberer optischer Abschluss zwischen der Oberfläche der Basisdekorschicht 120 und der oberen Oberfläche der Zusatzdekorschicht 130 möglich.

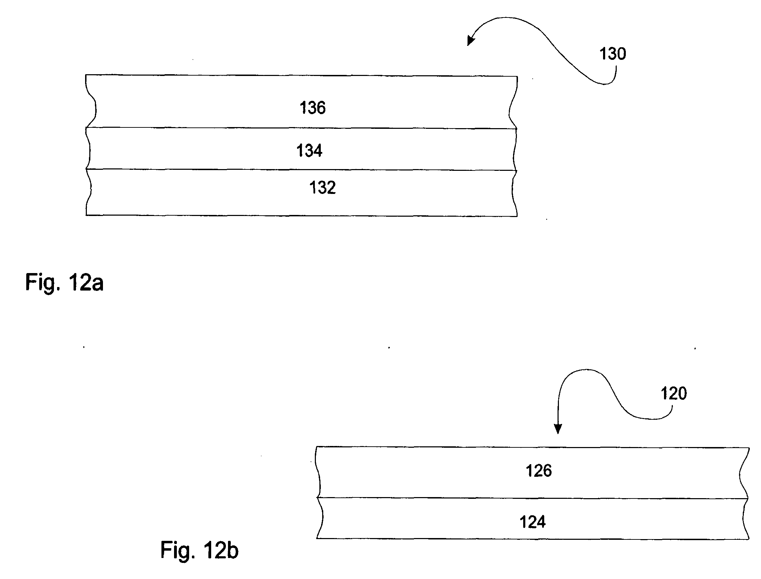

Die Figuren 12a und 12b zeigen jeweils eine Ausführungsform eines Zusatzdekorschicht 130 und einer Basisdekorschicht 120 hinsichtlich der Materialwahl. In beiden Fällen sind Zusatzdekorschicht 130 und Basisdekorschicht 120 mehrschichtig aufgebaut. In Figur 12a ist dabei der mehrschichtige Aufbau einer Zusatzdekorschicht 130 dargestellt. Von unten nach oben weist diese eine Vliesschicht 132 auf, welche insbesondere aus polypropylenhaltigen Fasern gebildet ist. Diese polypropylenhaltigen Fasern können durch eine darunter gelegte angewärmte Basisdekorschicht 120 angeschmolzen werden, sodass eine materialschlüssige Verbindung zwischen dieser Vliesschicht 132 der Zusatzdekorschicht 130 und einer korrespondierenden Schicht der Basisdekorschicht 120 ausgebildet werden kann. Oberhalb der Vliesschicht 132 ist eine Schaumschicht 134, beispielsweise aus Polyurethanschaum vorgesehen. Diese Polyurethanschaumschicht dient der verbesserten Haptik, der gesamten Zusatzdekorschicht 130. Nach oben abschließend findet sich die Dekorschicht 136, beispielsweise ein Stoff oder ein Leder, welche die gewünschten optischen und auch haptischen Eigenschaften für die Zusatzdekorschicht 130 aufweist.

Figur 12b zeigt eine Ausführungsform einer zweischichtigen Basisdekorschicht 120. Beide Schichten der Basisdekorschicht 120 sind im Wesentlichen aus thermoplastischen Olefin (TPO) ausgebildet. Die untere Schicht ist dabei ebenfalls eine Schaumschicht 124, während die obere Schicht eine Dekorschicht 126 darstellt. Die Dekorschicht 126 der Basisdekorschicht 120 ist dabei beispielsweise weniger hochwertig ausgeführt als die der Zusatzdekorschicht 130. Damit kann kostengünstigerweise auch eine große Fläche dekoriert sein. Durch die Ausbildung als thermoplastisches Olefin kann auch die materialschlüssige Verbindung nach dem Anwärmen der Basisdekorschicht 120 auf einen plastifizierenden Bereich insbesondere zwischen 180° Celsius und 220° Celsius mit der Rückseite, also mit der Vliesschicht 132 der Zusatzdekorschicht 130 erfolgen.

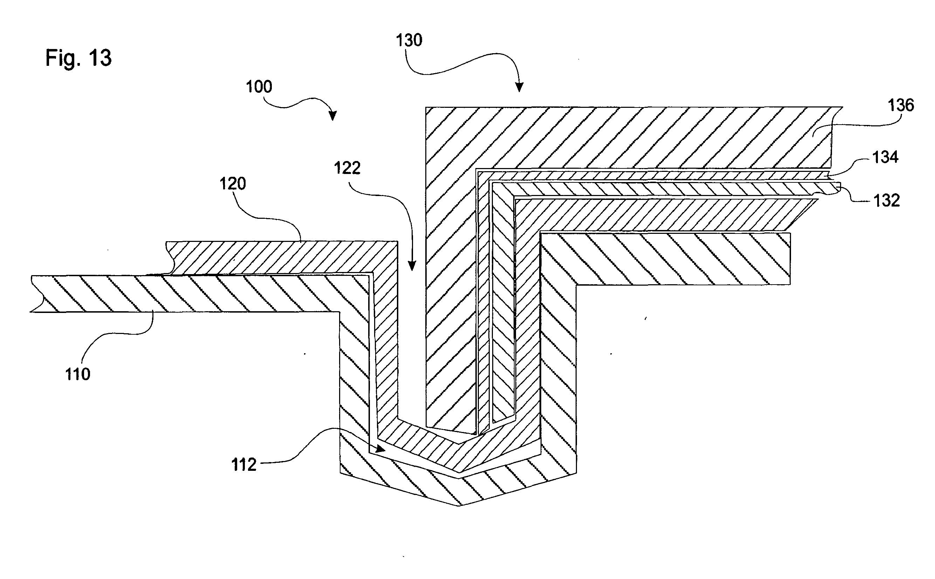

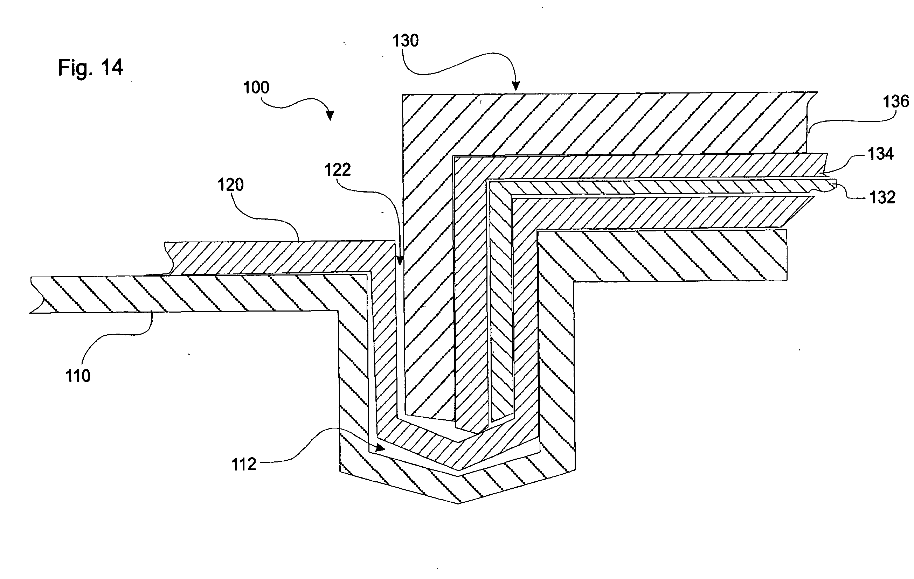

In Figur 13 und 14 ist eine Ausführungsform eines erfindungsgemäßen Dekorteils 100 dargestellt. Der Ausschnitt zeigt die jeweiligen Nuten 112 und 122. Diese sind ausgebildet worden, wie dies bereits weiter oben ausführlich erläutert worden ist. Wie in Figur 10 zu erkennen, benötigt der Konturgeber 60 Platz in der Basisdekorschichtnut 122. Durch das plastische Verformen der Basisdekorschicht 120 verbleibt dieser Platz nach dem Zurückfahren des Konturgebers 60, wie in Figur 11 dargestellt, als Spalt zwischen Zusatzdekorschicht 130 und Basisdekorschicht 120. Um diesen Spalt zu schließen kann der nachfolgend beschriebene Mechanismus genutzt werden. Figur 13 zeigt die Situation der bereits verbundenen Basisdekorschicht 120 mit dem Träger 110, beziehungsweise bereits der flächigen Verbindung zwischen Zusatzdekorschicht 130 und Basisdekorschicht 120. Die Verbindung ist hierbei nicht dargestellt sondern ist in materialschlüssiger Weise wie ausführlich erläutert erfolgt. In dieser Situation befindet sich, aus Übersichtlichkeitsgründen nicht dargestellt, noch das vollflächige Anlegen zwischen dem Zusatzdekorschicht 130 an dem korrespondierenden zweiten Flächenabschnitt 30 der oberen Werkzeugvorrichtung 40 sowie der Basisdekorschicht 120 an dem korrespondierenden ersten Flächenabschnitt 20 der oberen Werkzeugvorrichtung 40. Auch ist die Unterdruckvorrichtung 50, beziehungsweise der Anpressdruck des Trägers 110 noch aktiv, sodass die Schaumschicht 134 er dreischichtig aufgebauten Zusatzdekorschicht 130 sich im komprimierten Zustand befindet.

Wird nun die Unterdruckvorrichtung 50 abgeschaltet, beziehungsweise die Presskraft des Trägers 110 entfernt, so kann die Schaumschicht 134 expandieren. Mit anderen Worten nimmt die Dicke der Zusatzdekorschicht 130 zu. Damit erhebt sich die Zusatzdekorschicht 130 in Figur 14 in Bezug auf Figur 13 weiter nach oben, jedoch wird auch der Spalt in der Basisdekorschichtnut 120 durch das Expandieren der Schaumschicht 134 geschlossen. Damit entsteht eine noch vorteilhaftere Ausführungsform eines erfindungsgemäßen Dekorteils 100, da kein Spalt verbleibt, der für die Aufnahme von Schmutz geeignet wäre.

Figur 15 zeigt eine Ausführungsform einer erfindungsgemäßen Dichtungsvorrichtung für die Abdichtung zwischen der Klemmvorrichtung 70 und der oberen Werkzeugvorrichtung 40. Hier ist in der Klemmvorrichtung 70 ein nasenförmiger Rastfortsatz ausgebildet, der die Basisdekorschicht 120 in eine entsprechende Vertiefung der oberen Werkzeugvorrichtung 40 drückt. Dabei werden zwei Ergebnisse erzielt. Zum Einen erfolgt eine Abdichtung über die Basisdekorschicht 120 selbst, ohne dass zusätzliche Dichtmittel notwendig sind. Darüber hinaus erfolgt ein Einklemmen der Basisdekorschicht 120, sodass kein Nachfließen von Material während des Anlegens der Basisdekorschicht 120 an der Konturoberfläche 42 der oberen Werkzeugvorrichtung 40 erfolgen kann. Damit ist sichergestellt, dass ein definiertes plastisches Verformen der Basisdekorschicht 120 bereits während des Anlegevorgangs durchgeführt wird.

Die voranstehend beschriebenen Ausführungsformen sind ausschließlich als Beispiele zu verstehen, welche selbstverständlich, sofern technisch sinnvoll, frei miteinander kombiniert werden können.

### Bezugszeichenliste

- 10: Herstellvorrichtung
- 20: erster Flächenabschnitt
- 30: zweiter Flächenabschnitt
- 40: obere Werkzeugvorrichtung
- 42: Konturoberfläche
- 50: Unterdruckvorrichtung
- 60: Konturgeber
- 62: Anlagefläche
- 70: Klemmvorrichtung
- 80: untere Werkzeugvorrichtung
- 82: Konturoberfläche
- 100: Dekorteil
- 110: Träger
- 112: Trägernut
- 120: Basisdekorschicht
- 122: Basisdekorschichtnut
- 124: Schaumschicht
- 126: Dekorschicht
- 130: Zusatzdekorschicht
- 132: Vliesschicht
- 134: Schaumschicht
- 136: Dekorschicht

## Patentansprüche

1. Herstellvorrichtung (10) zur Herstellung eines Dekorteils (100), das einen Träger (110), eine einer Seitenfläche des Trägers (110) zugeordnete Basisdekorschicht (120) und eine der gleichen Seitenfläche des Trägers (110) zugeordnete Zusatzdekorschicht (130) aufweist, die in der Herstellvorrichtung (10) zum Bilden des Dekorteils (100) verbindbar und umformbar sind, die Herstellvorrichtung (10) aufweisend:
eine mit einer unteren Werkzeugvorrichtung (80) zusammenwirkende obere Werkzeugvorrichtung (40), die eine formgebende Konturoberfläche (42) zum Umformen aufweist, wobei die Konturoberfläche (42) zumindest einen ersten Flächenabschnitt (20) zur Aufnahme der Basisdekorschicht (120) und zumindest einen daran angrenzenden zweiten Flächenabschnitt (30) zur Aufnahme der Zusatzdekorschicht (130) aufweist,
eine der oberen Werkzeugvorrichtung (40) zugeordnete Unterdruckvorrichtung (50), welche derart ausgestaltet ist, dass zwischen dem zweitem Flächenabschnitt (30) und einer aufgenommenen Zusatzdekorschicht (130) ein Unterdruck erzeugt werden kann,
wobei am oder entlang des Randes des zweiten Flächenabschnitts (30) zumindest abschnittsweise wenigstens ein Konturgeber (60) angeordnet ist, der zwischen einer eingefahrenen und einer ausgefahrenen Stellung bewegbar ist, wobei in der ausgefahrenen Stellung eine Anlagefläche (62) des Konturgebers (60) über den Verlauf der Konturoberfläche (42) übersteht zur Ausbildung einer Basisdekorschichtnut (122) in der Basisdekorschicht (120).

2. Herstellvorrichtung (10) nach Anspruch 1, **dadurch gekennzeichnet, dass** der zweite Flächenabschnitt (30) eine gegenüber dem ersten Flächenabschnitt (20) ausgeformte Vertiefung darstellt.

3. Herstellvorrichtung (10) nach einem der vorangegangenen Ansprüche, **dadurch gekennzeichnet, dass** der Konturgeber (60) derart ausgestaltet ist, dass dessen Anlagefläche (62) in ausgefahrener Stellung in dem ersten Flächenabschnitt (20) und/oder in dem zweiten Flächenabschnitt (30) der Konturoberfläche (42) liegt, so dass damit zumindest ein Bereich der Basisdekorschicht (120) und ein Bereich die Zusatzdekorschicht (130) verformt werden kann.

4. Herstellvorrichtung (10) nach einem der vorangegangenen Ansprüche, **dadurch gekennzeichnet, dass** eine Klemmvorrichtung (70) zur Einspannung der Basisdekorschicht (120) vorgesehen ist, mit der die Basisdekorschicht (12) derart an der oberen Werkzeugvorrichtung (40) angeordnet werden kann, dass der Raum zwischen der eingespannter Basisdekorschicht (120) und der Konturoberfläche (42) der oberen Werkzeugvorrichtung (40) abgedichtet ist.

5. Herstellvorrichtung (10) nach einem der vorangegangenen Ansprüche, **dadurch gekennzeichnet, dass** die untere Werkzeugvorrichtung (80) eine Konturoberfläche (82) aufweist, die zumindest abschnittsweise komplementär zu der Konturoberfläche (42) der unteren Werkzeugvorrichtung (40) ist, wobei die untere Werkzeugvorrichtung (80) relativ zur oberen Werkzeugvorrichtung (40) bewegbar ist und zur Aufnahme des Trägers (110) ausgestaltet ist, um mit dem aufgenommenem Träger (110) diesen an der in dem ersten Flächenabschnitt (20) aufgenommenen Basisdekorschicht (120) derart anzulegen, dass eine Trägernut (112) im Träger (110) mit der Position des Konturgebers (60) in der Konturoberfläche (42) der oberen Werkzeugvorrichtung (40) korrespondiert, so dass der Konturgeber (60) bei einer Bewegung aus der eingefahrenen Stellung in die ausgefahrene Stellung in die Trägernut (112) einfahren kann.

6. Herstellvorrichtung (10) nach Anspruch 5, **dadurch gekennzeichnet, dass** die untere Werkzeugvorrichtung (80) in der Konturoberfläche (82) eine Nut zur Aufnahme der Trägernut (112) aufweist.

7. Herstellvorrichtung (10) nach einem der vorangegangenen Ansprüche, **dadurch gekennzeichnet, dass** die Unterdruckvorrichtung (50) der oberen Werkzeugvorrichtung (40) zumindest einen mikroporösen Abschnitt aufweist, der derart angeordnet ist, dass dessen Außenseite einen Bereich der Konturoberfläche (42) bildet.

8. Herstellvorrichtung (10) nach einem der vorangegangenen Ansprüche, **dadurch gekennzeichnet, dass** die Konturoberfläche (42) der oberen Werkzeugvorrichtung (40) zumindest im ersten Abschnitt (20) eine Mikronegativstruktur aufweist zur Erzeugung einer Mikropositivstruktur auf einer Seite der Basisdekorschicht (120).

9. Verfahren zum Herstellen eines Dekorteils (100), bei dem ein Träger (110), eine Basisdekorschicht (120) und eine Zusatzdekorschicht (130) zusammengefügt und umgeformt werden, mit den folgenden Schritten:
Anlegen einer Zusatzdekorschicht (130) an einem zweiten Flächenabschnitt (30) einer Konturoberfläche (42) einer oberen Werkzeugvorrichtung (40),
Erzeugen eines Unterdrucks zwischen der angelegten Zusatzdekorschicht (130) und dem zweiten Abschnitt (30) der Konturoberfläche (42),
Anlegen einer Basisdekorschicht (120) an einem ersten Flächenabschnitt (20) der Konturoberfläche (42) der oberen Werkzeugvorrichtung (40), der an dem zweiten Flächenabschnitt (30) angrenzt,
Erzeugen eines Unterdrucks zwischen der angelegten Basisdekorschicht (120) und dem ersten Flächenabschnitt (20) der Konturoberfläche (42),
Bewegen von zumindest einem Konturgeber (60) aus einer eingefahrenen Stellung in eine ausgefahrene Stellung zur Ausbildung einer Basisdekorschichtnut (122) in der Basisdekorschicht (120),
Anlegen eines Trägers (110) an die Seitenfläche der Basisdekorschicht (120), die die entgegengesetzte Seitenfläche zu der an der Konturoberfläche (42) anliegenden Seitenfläche ist, zur flächigen Verbindung der Basisdekorschicht (120) mit dem Träger (110) und/oder der Basisdekorschicht (120) mit die Zusatzdekorschicht (130) und/oder die Zusatzdekorschicht (130) mit dem Träger (110).

10. Verfahren nach Anspruch 9, **dadurch gekennzeichnet, dass** jeweils vor dem Anlegen der Basisdekorschicht (120) am ersten Flächenabschnitt (20) und/oder vor dem Anlegen des Trägers (110) an der Basisdekorschicht (120) die Basisdekorschicht (120) und/oder der Träger (110) zumindest teilweise erwärmt werden.

11. Verfahren nach einem der Ansprüche 9 oder 10, **dadurch gekennzeichnet, dass** der Konturgeber (60) bei der Ausbildung der Basisdekorschichtnut (122) zumindest einen Abschnitt die Zusatzdekorschicht (130) in die dabei entstehende Basisdekorschichtnut (122) hinein bewegt.

12. Verfahren nach einem der Ansprüche 9 bis 11, **dadurch gekennzeichnet, dass** eine Herstellvorrichtung (10) verwendet wird, die wenigstens aufweist:
eine mit einer unteren Werkzeugvorrichtung (80) zusammenwirkende obere Werkzeugvorrichtung (40), die eine formgebende Konturoberfläche (42) zum Umformen aufweist, wobei die Konturoberfläche (42) zumindest einen ersten Flächenabschnitt (20) zur Aufnahme der Basisdekorschicht (120) und zumindest einen daran angrenzenden zweiten Flächenabschnitt (30) zur Aufnahme der Zusatzdekorschicht (130) aufweist,
eine in der oberen Werkzeugvorrichtung (40) angeordnete Unterdruckvorrichtung (50), welche derart ausgestaltet ist, dass zwischen dem zweitem Flächenabschnitt (30) und einer aufgenommenen Zusatzdekorschicht (130) und/oder zwischen dem erstem Flächenabschnitt (20) und einer aufgenommenen Basisdekorschicht (120) ein Unterdruck erzeugt werden kann,
wobei am oder entlang des Randes des zweiten Flächenabschnitts (30) zumindest abschnittsweise wenigstens ein Konturgeber (60) angeordnet ist, der zwischen einer eingefahrenen und einer ausgefahrenen Stellung bewegbar ist, wobei in der ausgefahrenen Stellung eine Anlagefläche (62) des Konturgebers (60) über den Verlauf der Konturoberfläche (42) übersteht zur Ausbildung einer Basisdekorschichtnut (122) in der Basisdekorschicht (120).

## Claims

1. Manufacturing device (10) for manufacturing of decoration parts (100) which comprises a support (110), a basic decoration layer (120) which is associated to a side surface of the support (110) and an additional decoration layer (130) which is associated to the same side surface of the support (110), which are connectable and deformable in the manufacturing device (10) for forming the decoration part (100), the manufacturing device (10) comprising:
an upper tool device (40) which coacts with a lower tool device (80), the upper tool device (40) comprising a shape forming contour surface (42) for shape forming,
wherein the contour surface (42) comprises at least a first surface section (20) for receiving the basic decoration layer (120) and at least a second surface section (30) which borders the same and which is provided for receiving the additional decoration layer (130),
a vacuum device (50) which is associated to the upper tool device (40), wherein the vacuum device (50) is designed such that between the second surface section (30) and an adjacent additional decoration layer (130) a low pressure can be generated,
wherein at the edge or along the edge of the second surface section (30) at least sectionally at least a contour shape forming device (60) is disposed, which is movable between a retracted and an extended position, wherein in the extended position a contact surface (62) of the contour shape forming device (60) exceeds over the extension of the contour surface (42) for forming of a basic decoration layer groove (122) in the basic decoration layer (120).

2. Manufacturing device (10) according to claim 1, **characterized in that** the second surface section (30) constitutes a recess which is formed with regard to the first surface section (20).

3. Manufacturing device (10) according to one of the preceding claims, **characterized in that** the contour shape forming device (60) is formed such that the contact surface (62) thereof is situated in its extended position in the surface section (20) and/or the second surface section (30) of the contour surface (42) so that thereby at least an area of the basic decoration layer (120) and an area of the additional decoration layer (130) can be deformed.

4. Manufacturing device (10) according to one of the preceding claims, **characterized in that** a clamping device (70) is provided for clamping the basic decoration layer (120), wherein with the clamping device (70) the basic decoration layer (12) can be disposed at the upper tool device (40) such that the space between the clamped basic decoration layer (120) and the contour surface (42) of the upper tool device (40) is sealed.

5. Manufacturing device (10) according to one of the preceding claims, **characterized in that** the lower tool device (80) comprises a contour surface (82) whci is at least sectionally complementary to the contour surface (42) of the lower tool device (40), wherein the lower tool device (80) is movable relative to the upper tool device (40) an is designed for receiving the support (110) in order to put the received support (110) to the basic decoration layer (120) being situated in the first surface section (20) such that a support groove (112) in the support (110) corresponds with the position of the contour shape forming device (60) in the contour surface (42) of the upper tool device (40) so that the contour shape forming device (60) can be introduced in the support groove (112) by a movement from the retracted position in the extended position.

6. Manufacturing device (10) according to claim 5, **characterized in that** the lower tool device (80) comprises a groove in the contour surface (82) for receiving the support groove (112).

7. Manufacturing device (10) according to one of the preceding claims, **characterized in that** the vacuum device (50) of the upper tool device (40) at least one micro-porous section which is disposed such that the outer face thereof forms an area of the contour surface (42).

8. Manufacturing device (10) according to one of the preceding claims, **characterized in that** the contour surface (42) of the upper tool device (40) comprises in at least a first section (20) a micro negative structure for generation of a micro positive structure on one side of the basic decoration layer (120).

9. Method for manufacturing a decoration part (100) in which a support (110), a basic decoration layer (120) and an additional decoration layer (130) are combined and formed, the method comprising the following steps:
Applying an additional decoration layer (130) on a second surface section (30) of a contour surface (42) of an upper tool device (40),
Generating a low pressure between the applied additional decoration layer (130) and
the second section (30) of the contour surface (42),
Applying a basic decoration layer (120) on a first surface section (20) of the contour surface (42) of the upper tool device (40) which borders the second surface section (30),
Generating a low pressure between the applied basic decoration layer (120) and the first surface section (20) of the contour surface (42),
Moving of at least one contour shape forming device (60) from a retracted position to an extended position for forming a basic decoration layer groove (122) in the basic decoration layer (120),
Applying of a support (110) on the side surface of the basic decoration layer (120) which is a side surface opposite to the side surface which is applied on contour surface (42) for providing a planar connection between the basic decoration layer (120) and the support (110) and/or between the basic decoration layer (120) and the additional decoration layer (130) and/or between the additional decoration layer (130) with the support (110).

10. Method according to claim 9, **characterized in that** respectively before the applying of the basic decoration layer (120) on the first surface section (20) and/or before the applying of the support (110) on the basic decoration layer (120) the basic decoration layer (120) and/or the support (110) is at least partially heated.

11. Method according to one of claims 9 or 10, **characterized in that** during forming the basic decoration layer groove (122) the contour shape forming device (60) moves at least a section of the additional decoration layer (130) in the basic decoration layer groove (122) which is formed in this way.

12. Method according to one of the preceding claims, **characterized in that** a manufacturing device (10) is used which at least comprises:
an upper tool device (40) which coacts with a lower tool device (80), wherein the upper tool device (40) comprises a shape forming contour surface (42) for shape forming,
wherein the contour surface (42) comprises at least a first surface section (20) for receiving the basic decoration layer (120) and at least a second surface section (30) which borders the same and which is provided for receiving the additional decoration layer (130),
a vacuum device (50) which is disposed in the upper tool device (40), wherein the vacuum device (50) is designed such that between the second surface section (30) and an adjacent additional decoration layer (130) and/or between the first surface section (20) and an adjacent basic decoration layer (120) a low pressure can be generated,
wherein at the edge or along the edge of the second surface section (30) at least sectionally at least a contour shape forming device (60) is disposed, which is movable between a retracted and an extended position, wherein in the extended position a contact surface (62) of the contour shape forming device (60) exceeds over the extension of the contour surface (42) for forming of a basic decoration layer groove (122) in the basic decoration layer (120).

## Revendications

1. Dispositif de fabrication (10) pour la fabrication d'un élément décoratif (100) qui présente un support (110), une couche décorative de base (120) associée à une surface latérale du support (110) et une couche décorative supplémentaire (130) associée à la même surface latérale du support (110) et qui peuvent être reliés et déformables dans le dispositif de fabrication (10) pour constituer l'élément décoratif (100), le dispositif de fabrication (10) présentant :
un dispositif d'outillage supérieur (40) interagissant avec un dispositif d'outillage inférieur (80) donnant une forme présente une surface de cernage (42) pour la déformation, la surface de cernage (42) présentant au moins une première section de surface (20) destinée à recevoir la couche décorative de base (120) et au moins une seconde section de surface adjacente à celle-ci (30) et destinée à recevoir la couche décorative supplémentaire (130),
un dispositif de dépression (50) associé au dispositif d'outillage supérieur (40) et qui est conçu de manière à ce que, entre la seconde section de surface (30) et une couche décorative supplémentaire reçue (130), une dépression puisse être générée,
dans lequel, au niveau ou le long du bord de la seconde section de surface (30), au moins par endroits, est disposé au moins un délimiteur de contour (60) qui est mobile entre une position rentrée et une position sortie, sachant que, en position sortie, une surface d'appui (62) du délimiteur de contour (60) dépasse de l'extension de la surface de cernage (42) pour former une rainure de couche décorative de base (122) dans la couche décorative de base (120).

2. Dispositif de fabrication (10) selon la revendication 1, **caractérisé en ce que** la seconde section de surface (30) constitue un creux pratiqué concernant la première section de surface (20).

3. Dispositif de fabrication (10) selon une des revendications précédentes, **caractérisé en ce que** le délimiteur de contour (60) est conçu de manière à ce que sa surface d'appui (62), en position sortie, repose dans la première section de surface (20) et/ou dans la seconde section de surface (30) de la surface de cernage (42), de sorte qu'ainsi au moins une zone de la couche décorative de base (120) et une zone de la couche décorative supplémentaire (130) peuvent être déformées.

4. Dispositif de fabrication (10) selon une des revendications précédentes, **caractérisé en ce qu'**il est prévu pour intégrer la couche décorative de base (120) un dispositif de serrage (70) grâce auquel la couche décorative de base (12) peut être disposée au niveau du dispositif d'outillage supérieur (40) de manière à ce que l'espace entre la couche décorative de base intégrée (120) et la surface de cernage (42) du dispositif d'outillage supérieur (40) soit étanchéifié.

5. Dispositif de fabrication (10) selon une des revendications précédentes, **caractérisé en ce que** dispositif d'outillage inférieur (80) présente une surface de cernage (82) qui est du moins par endroits complémentaire avec la surface de cernage (42) du dispositif d'outillage inférieur (40), le dispositif d'outillage inférieur (80) étant mobile par rapport au dispositif d'outillage supérieur (40) et pour recevoir le support (110) afin de, avec le support reçu (110), d'appliquer celui-ci au niveau de la couche décorative de base (120) reçue dans la première section de surface (20) de manière à ce qu'une rainure porteuse (112) pratiquée dans le support (110) corresponde à la position du délimiteur de contour (60) de la surface de cernage (42) du dispositif d'outillage supérieur (40), de sorte que le délimiteur de contour (60), lors d'un mouvement de la position rentrée vers la position sortie, peut entrer dans la rainure porteuse (112).

6. Dispositif de fabrication (10) selon la revendication 5, **caractérisé en ce que** le dispositif d'outillage inférieur (80) présente dans la surface de cernage (82) une rainure destinée à recevoir la rainure porteuse (112).

7. Dispositif de fabrication (10) selon une des revendications précédentes, **caractérisé en ce que** le dispositif de dépression (50) du dispositif d'outillage supérieur (40) présente au moins une section microporeuse qui est disposée de manière à ce que sa surface extérieure forme une partie de la surface de cernage (42).

8. Dispositif de fabrication (10) selon une des revendications précédentes, **caractérisé en ce que** la surface de cernage (42) du dispositif d'outillage supérieur (40) présente, au moins dans la première section (20), une microstructure négative pour générer une microstructure positive sur une face de la couche décorative de base (120).

9. Procédé de fabrication d'un élément décoratif (100), dans lequel un support (110), une couche décorative de base (120) et une couche décorative supplémentaire (130) sont assemblés et déformés, comportant les étapes suivantes :
pose d'une couche décorative supplémentaire (130) au niveau d'une seconde section de surface (30) d'une surface de cernage (42) d'un dispositif d'outillage supérieur (40),
génération d'une dépression entre la couche décorative supplémentaire posée (130) et la seconde section (30) de la surface de cernage (42),
pose d'une couche décorative de base (120) au niveau d'une première section de surface (20) de la surface de cernage (42) du dispositif d'outillage supérieur (40) qui est adjacente à la seconde section de surface (30),
génération d'une dépression entre la couche décorative de base posée (120) et la première section de surface (20) de la surface de cernage (42),
déplacement d'au moins un délimiteur de contour (60) d'une position rentrée à une position sortie pour constituer une rainure de couche décorative de base (122) dans la couche décorative de base (120),
pose d'un support (110) sur la surface latérale de la couche décorative de base (120) qui est la surface latérale opposée à la surface latérale se trouvant sur la surface de cernage (42) pour la connexion surfacique de la couche décorative de base (120) avec le support (110) et/ou de la couche décorative de base (120) avec la couche décorative supplémentaire (130) et/ou de la couche décorative supplémentaire (130) avec le support (110).

10. Procédé selon la revendication 9, **caractérisé en ce que**, respectivement avant la pose de la couche décorative de base (120) sur la première section de surface (20) et/ou avant la pose du support (110) sur la couche décorative de base (120), la couche décorative de base (120) et/ou le support (110) sont chauffés au moins partiellement.

11. Procédé selon une des revendications 9 ou 10, **caractérisé en ce que** le délimiteur de contour (60), lors de la constitution de la rainure de couche décorative de base (122), fait rentrer au moins une section de la couche décorative supplémentaire (130) dans la rainure de couche décorative de base (122) alors formée.

12. Procédé selon une des revendications 9 à 11, **caractérisé en ce qu'**on utilise un dispositif de fabrication (10) qui présente au moins :
un dispositif d'outillage supérieur (40) interagissant avec un dispositif d'outillage inférieur (80) et qui présente une surface de cernage (42) pour modifier la forme, la surface de cernage (42) présentant au moins une première section de surface (20) destinée à recevoir la couche décorative de base (120) et au moins une seconde section de surface adjacente à celle-ci (30) et destinée à recevoir la couche décorative supplémentaire (130),
un dispositif de dépression (50) disposé dans le dispositif d'outillage supérieur (40) et qui est conçu de manière à ce que, entre la seconde section de surface (30) et une couche décorative supplémentaire reçue (130) et/ou, entre la première section de surface (20) et une couche décorative de base reçue (120), une dépression puisse être générée,
sachant que, au niveau ou le long du bord de la seconde section de surface (30), est disposé du moins par endroits au moins un délimiteur de contour (60) qui est mobile entre une position rentrée et une position sortie, sachant que, en position sortie, une surface d'appui (62) du délimiteur de contour (60) dépasse de l'extension de la surface de cernage (42) pour constituer une rainure de couche décorative de base (122) dans la couche décorative de base (120).
